# EUROPEAN PATENT APPLICATION

(11) **EP 2 597 825 A1**
(43) Date of publication of application: **29.05.2013**
(21) Application number: 11809637.9
(22) Date of filing: 19.07.2011
(51) Int. Cl.: H04L 12/56, G06F 13/00, H04N 7/173

(54) **DATA DISTRIBUTION SYSTEM, DATA DISTRIBUTION METHOD, DATA RELAY DEVICE ON DISTRIBUTION SIDE, AND DATA RELAY DEVICE ON RECEPTION SIDE**

(30) Priority: 20.07.2010 JP 2010162557
(71) Applicant: Sharp Kabushiki Kaisha, Osaka-shi, Osaka 545-8522 (JP)
(72) Inventor: WATANABE, Shuichi, Osaka 545-8522 (JP); TATAHASHI, Maki, Osaka 545-8522 (JP)
(74) Representative: Müller - Hoffmann & Partner
(86) International application number: PCT/JP2011/066355
(87) International publication number: WO 2012/011467

(57) **Abstract**

A data distribution system for distributing content data by HTTP in a MIME multipart format is arranged such that in accordance with, for example, a frequency of generation of an identical request, a server-side proxy adaptively distributes the content data via a broadcasting path and a communication path. According to the data distribution system, a client-side proxy carries out a merge process with respect to information (path discrimination information and synchronization information) as to data which is adaptively distributed via the communication path and the broadcasting path following distribution of a response message via the communication path.

## Description

### Technical Field

The present invention relates to a multimedia data distribution technique, more specifically to a data distribution system and a data distribution method each enabling efficient multimedia data distribution which is suitable for communication by use of a data transmission protocol and distribution in cooperation with broadcasting.

### Background Art

In recent years, there has been a growing demand for distribution of multimedia data including content of a moving image, a live video, and music. A widely used method for distributing these pieces of multimedia data (e.g., a text, a still image, and a moving image) is exemplified by World Wide Web (also simply referred to as "Web"), which is a hypertext system that is provided on the Internet. World Wide Web is a system based on a client server model. A user terminal which serves as a client and obtains a resource such as a web page on World Wide Web uses a web browser to obtain data of multimedia from a World Wide Web server. In this case, HTTP (Hypertext Transfer Protocol) is used as a protocol for a file transfer. There has also been a growing demand for a system which allows a video to be easily used by HTTP, and various distribution methods are under consideration.

Firstly, the following description briefly explains HTTP. HTTP is a protocol for transmitting multimedia data between a client and a content server. A basic structure of a format in which data is delivered by HTTP is constituted by a "header part", a "delimiter (blank row)", and a "data part". Information as to contents of data and control information are written to the header part. A body of the data is written to the data part.

In a case where the content server has content data which the client desires to obtain, the client sends a request message to the content server by HTTP. The request message for requesting content data basically has no "data part". Therefore, a "header part" and a "delimiter (blank row)" indicative of an end of the header part are sent. In response to a request for content from the client, the content server extracts, from information specified by the received "header part", requested page information, and then distributes, to the client, a response message (constituted by a "header part", a "delimiter (blank row)", and a "data part") in which the extracted page information is stored in the "data part".

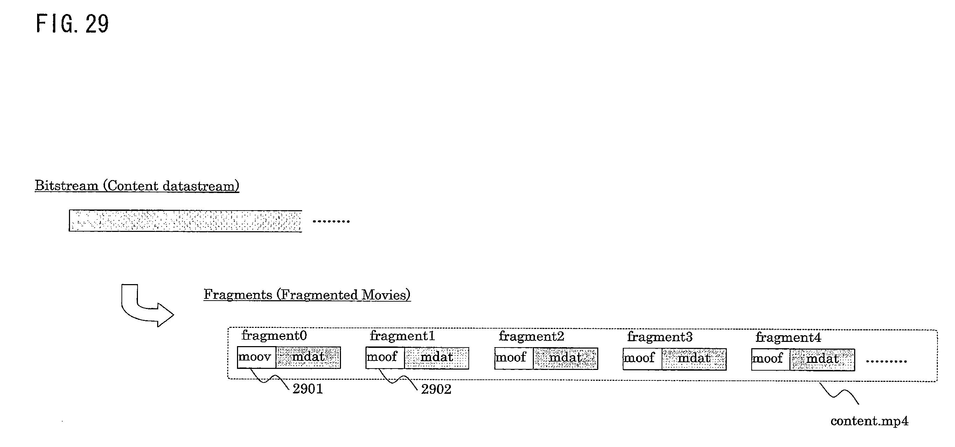

The following description discusses a structure of data which is distributed by HTTP. Fig. 29 shows a structure of data in an MP4 file format including a conventional fragment video format. A fragment is unit data obtained by (i) dividing data of content into pieces of data having a given length and (ii) combining the pieces of data so that the data can be distributed. Data which can be handled per fragment can be easily sorted, separated, or synthesized. An MP4 file consists of fragments which are a fragment 2901 and fragments 2902. The fragment 2901, which is located at the head of the fragments, has a moov header in which general information (such as initialization information) for reproducing a video is stored. Each of the fragments 2902, which are the remaining fragments, has a moof header in which information for reproducing data contained in a corresponding fragment is stored. Note that one (1) fragment consists of one (1) header and mdat of a media data part corresponding to the one (1) header. One (1) MP4 file is constituted by at least one fragment.

Patent Literature 1 describes a distribution method that employs a fragment video format (Fragmented Movie) in ISO Base Media File Format of MPEG. According to the fragment video format, data concerning an entire moving image and metadata corresponding to divisional moving image data which is obtained by a division by a certain standard are written to the head of a file, and then divisional moving image data corresponding to the metadata is recorded in a subsequent part of the file. Note here that the metadata is not divisional moving image data itself but information as to the divisional moving image data such as the number of videos included in data, an image size, an encoding method, a bit rate, a data location, and a time stamp. Subsequently, similarly, metadata of divisional moving image data and corresponding divisional moving image data are recorded in time series. Handling of a combination of one piece of (1) divisional moving image data and its metadata as one (1) group makes it possible to know a data size in advance. Thus, the distribution method can also be used in a protocol for a file transfer such as HTTP. According to Patent Literature 1, in order to reduce, for example, a processing load on a distribution side and a traffic on a communication network, a system is arranged such that, when a video is distributed, from a network camera, to a plurality of reproducing devices, a proxy is provided between the network camera and the plurality of reproducing devices. Identical master data of a video signal which is distributed from the network camera to each of the plurality of reproducing devices is distributed as individual data to a client via the proxy.

A high-speed download service is also under consideration. According to the high-speed download service, a transmission path for satellite broadcasting whose transmission band is secured at all times is used to simultaneously distribute, to many viewers, content with high image quality and high sound quality. File data in an IP packet format which data is used in communication is broadcasted by downloading on a broadcast wave. For example, ARIB STD-B45 "Content Download System for Advanced Wide Band Digital Satellite Broadcasting" (Non-Patent Literature 1) has been standardized and disclosed. This standard, which has been prepared on the assumption that broadcasting and communication cooperate with each other, is standardized as a hybrid method. According to the hybrid method, content which is high in demand is simultaneously distributed via a broadcasting transmission path, whereas content which is individually requested (e.g., a license) is separately distributed via a communication transmission path.

### Citation List

### Patent Literature

Patent Literature 1
   Japanese Patent Application Publication, Tokukai, No. 2007-173987 (Publication Date: July 5, 2007)

### Non-Patent Literature

Non-Patent Literature 1
   "Content Download System for Advanced Wide Band Digital Satellite Broadcasting" [online], Association of Radio Industries and Businesses, April 26, 2010, ARIB STD-B45, [retrieved on July 8, 2010), Internet <URL: HTTP://www.arib.or.jp/english/html/overview/doc 2-STD-B45v1_0.pdf>

### Summary of Invention

### Technical Problem

However, a problem occurs such that merely a method in which content data is simultaneously distributed by conventional communication (see Patent Literature 1) is insufficient to prevent an increase in traffic on a communication network especially during distribution of a live video. Assume that many viewers simultaneously send, from their respective TV terminals (clients) to a content server on a broadcasting station side, requests to view identical content data. In this case, a problem remains to be solved such that distribution from the content server of the identical content data to each of the many viewers causes a sudden increase in traffic on a communication network, so that a communication speed becomes extremely low.

Moreover, for example, Non-Patent Literature 1 exemplifies an established distribution method in which content data is simultaneously distributed via broadcasting on the assumption that broadcasting and communication cooperate with each other, broadcasting and communication are separate in distribution method from each other. That is, there has been no mechanism that allows data received via each of a communication path and a broadcasting path to cooperate and synchronize with each other. Therefore, it is impossible to, for example, combine the data received via each of the communication path and the broadcasting path and handle the combined data as one (1) piece of content.

The present invention has been made in view of the problems, and an object of the present invention is to provide a data distribution system and a data distribution method each of which allows a reduction in traffic on a communication network by adaptively using a communication path and a broadcasting path to disperse a load which occurs while data is simultaneously being distributed from a content server-side proxy to a client-side proxy.

### Solution to Problem

A data distribution system in accordance with the present invention includes: a data distribution device; a distribution-side data relay device; a reception-side data relay device; and a reception terminal device, the data distribution device distributing a plurality of pieces of content data in units of media segments in accordance with a given format, the distribution-side data relay device being connected to each of the data distribution device, a communication network, and a broadcasting network, and distributing, via at least one of the broadcasting network and the communication network, the plurality of pieces of content data which are distributed from the data distribution device, the reception-side data relay device being connected to each of the communication network and the broadcasting network, and distributing, to the reception terminal device, the plurality of pieces of content data which are distributed from the distribution-side data relay device, the reception terminal device being capable of receiving the plurality of pieces of content data which are distributed from the reception-side data relay device, and in response to a data request from the reception terminal device, the distribution-side data relay device adaptively distributing the plurality of pieces of content data via the broadcasting network and the communication network.

A method of distributing data in accordance with the present invention includes the steps of: (a) distributing a plurality of pieces of content data in units of media segments in accordance with a given format; (b) distributing, via at least one of a broadcasting network and a communication network, the plurality of pieces of content data which are distributed in the step (a); (c) distributing the plurality of pieces of content data which are distributed via the communication network and the broadcasting network in the step (b); and (d) receiving the plurality of pieces of content data which are distributed in the step (c), in the step (b), in response to a data request, the plurality of pieces of content data being adaptively distributed via the broadcasting network and the communication network.

A distribution-side data relay device in accordance with the present invention which in a data distribution system for distributing, from a data distribution device to a reception terminal device(s) via a network, content that is requested by the reception terminal device(s), receives the content from the data distribution device and distributes the content to the reception terminal device(s), the distribution-side data relay device includes: first transmission means for distributing the content via a first distribution path; second transmission means for distributing the content via a second distribution path which is different from the first distribution path; and selection means for selecting the distribution, by either the first transmission means or the second transmission means, the content that is requested by the reception terminal device(s).

According to the arrangement, the selection means can select either the first transmission means or the second transmission means so as to distribute, to the reception terminal device, content that is requested by the reception terminal device. This makes it possible to transmit the content by adaptively selecting between the two transmission means.

A reception-side data relay device in accordance with the present invention which in a data distribution system for distributing content from a data distribution device to a reception terminal device via a network, receives the content thus distributed and distributes the content to the reception terminal device, the reception-side data relay device includes: first reception means for receiving the content which has been distributed via a first distribution path; second reception means for receiving the content which has been distributed via a second distribution path, the second distribution path being different in transmission data format from the first distribution path; and format unification means for transmitting, to the reception terminal device in an identical transmission data format, the content which has been received by either the first reception means or the second reception means.

According to the arrangement, the format unification means causes pieces of content which have been distributed in different transmission data formats via different communication paths to be in an identical transmission data format, and transmits the pieces of content to the reception terminal device. According to this, the reception terminal device can use the pieces of content without the need of considering via which path and in what transmission data format each of the pieces of content has been distributed.

### Advantageous Effects of Invention

According to the data distribution system and the data distribution method in accordance with the present invention, it is possible to reduce traffic on a communication network by adaptively using a communication path and a broadcasting path to disperse a load which occurs while data is simultaneously being distributed from a content server-side proxy to a client-side proxy.

For a fuller understanding of the nature and advantages of the invention, reference should be made to the ensuing detailed description taken in conjunction with the accompanying drawings.

### Brief Description of Drawings

Fig. 1

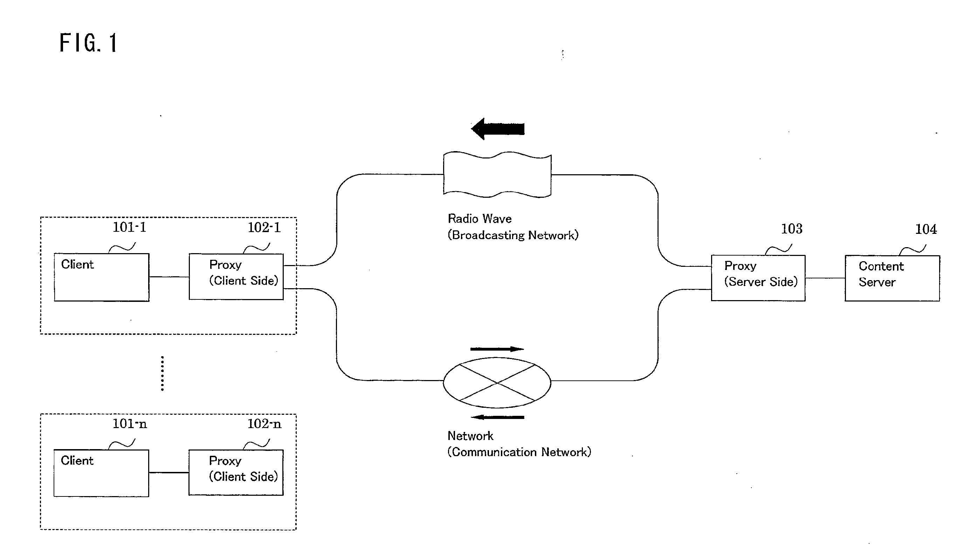

   Fig. 1 is a system configuration diagram showing an overall arrangement of a data distribution system in accordance with the first embodiment of the present invention.
Fig. 2

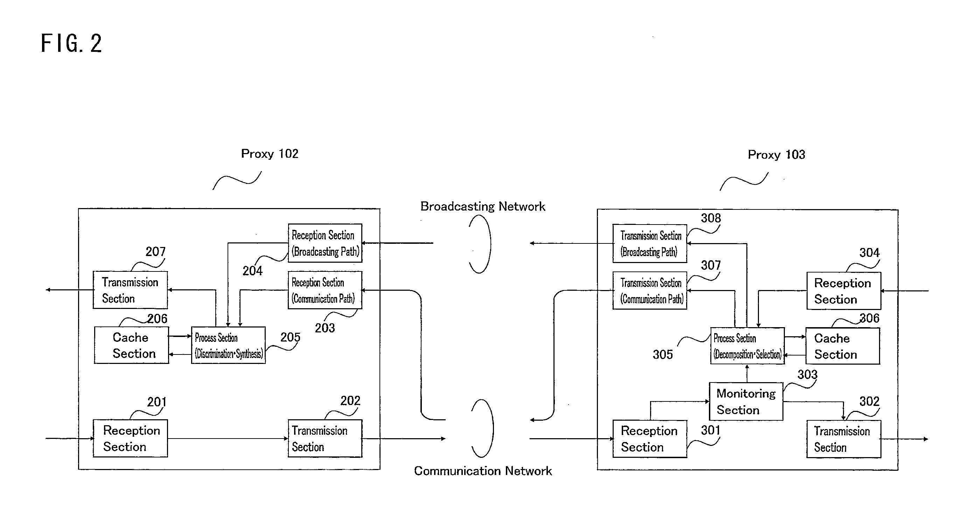

   Fig. 2 is a functional block diagram of a client-side proxy and a server-side proxy in accordance with the first embodiment of the present invention.
Fig. 3

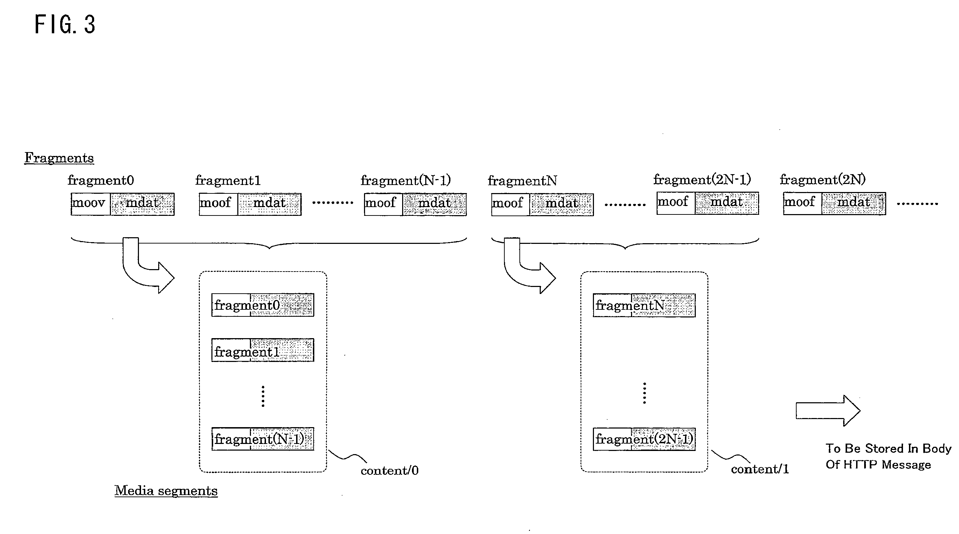

   Fig. 3 shows a media segment in accordance with the first embodiment of the present invention.
Fig. 4

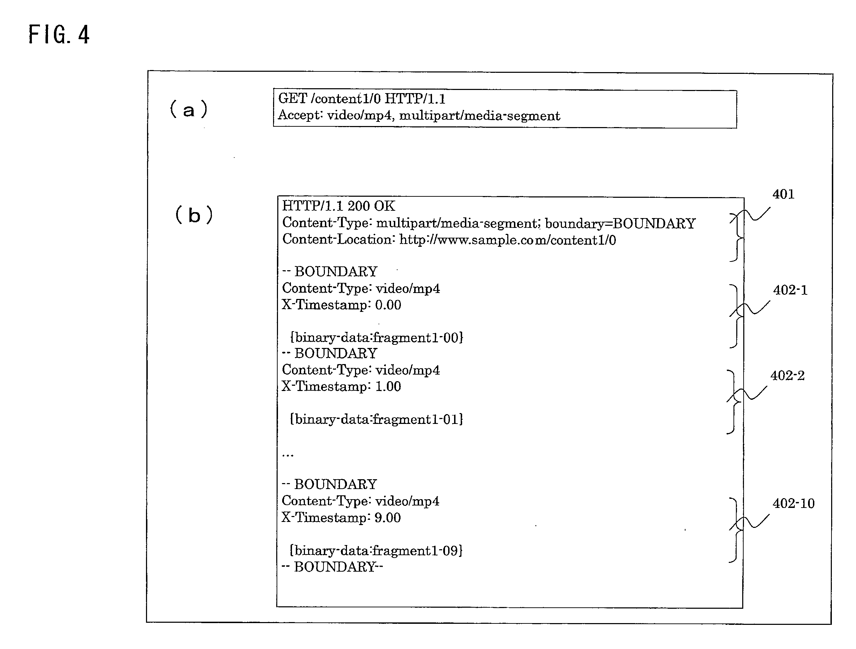

   Fig. 4 shows a multipart format in accordance with the first embodiment of the present invention.
Fig. 5

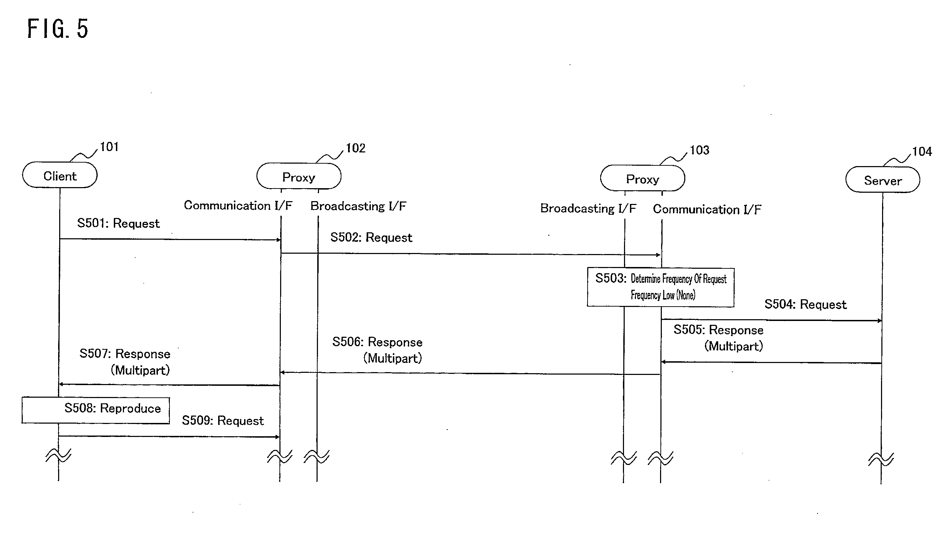

   Fig. 5 is a sequence chart showing a process which is carried out in accordance with the first embodiment of the present invention and in which response paths are changed when a server receives a first request for content.
Fig. 6

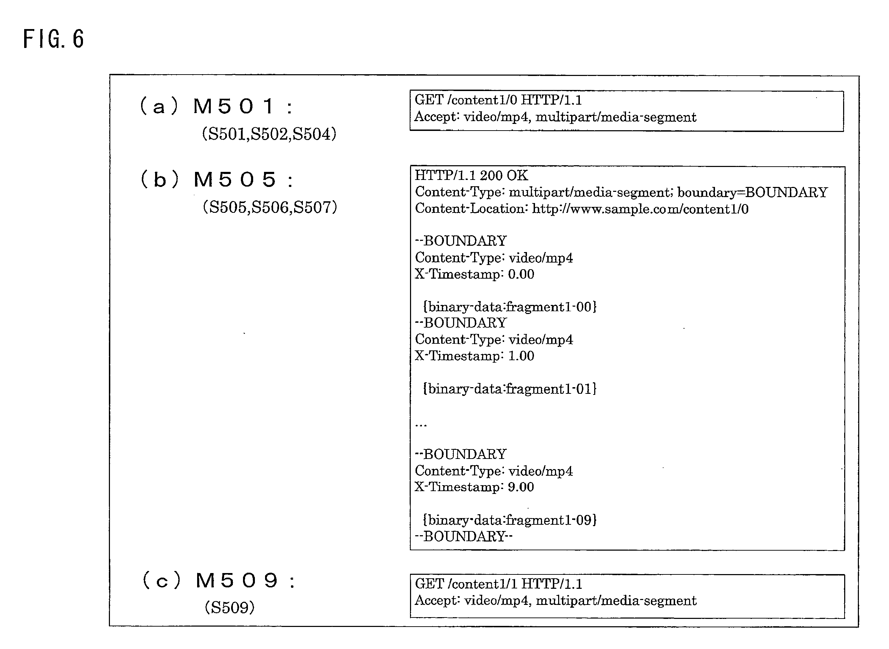

   Fig. 6 shows HTTP messages which are transmitted and received in accordance with the first embodiment of the present invention, in a process in which the response paths are changed when the server receives the first request for content.
Fig. 7

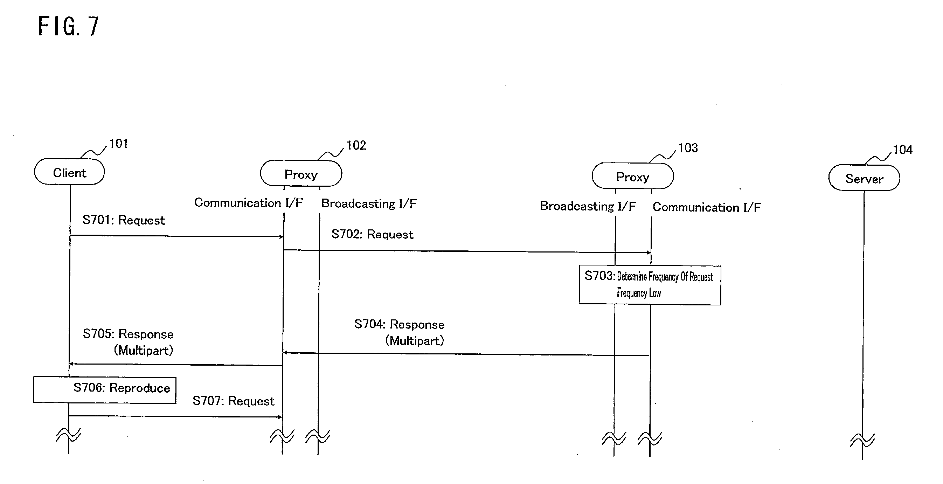

   Fig. 7 is a sequence chart showing a process which is carried out in accordance with the first embodiment of the present invention and in which response paths are changed in a case where a request for content has already been received and the request for content is received with low frequency.
Fig. 8

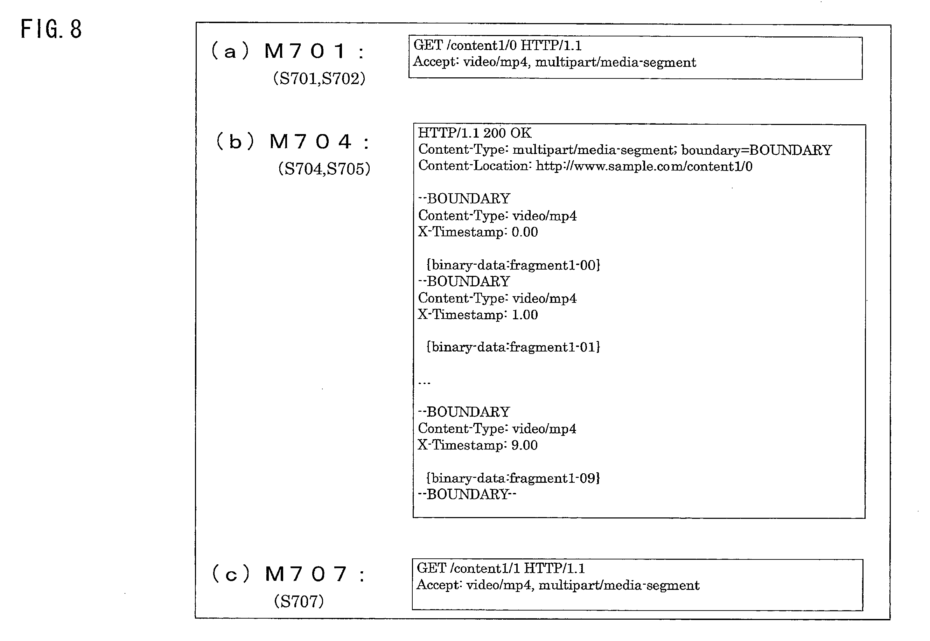

   Fig. 8 shows HTTP messages which are transmitted and received in accordance with the first embodiment of the present invention, in a process in which response paths are changed in a case where a request for content has already been received and the request for the content is received with low frequency.
Fig. 9

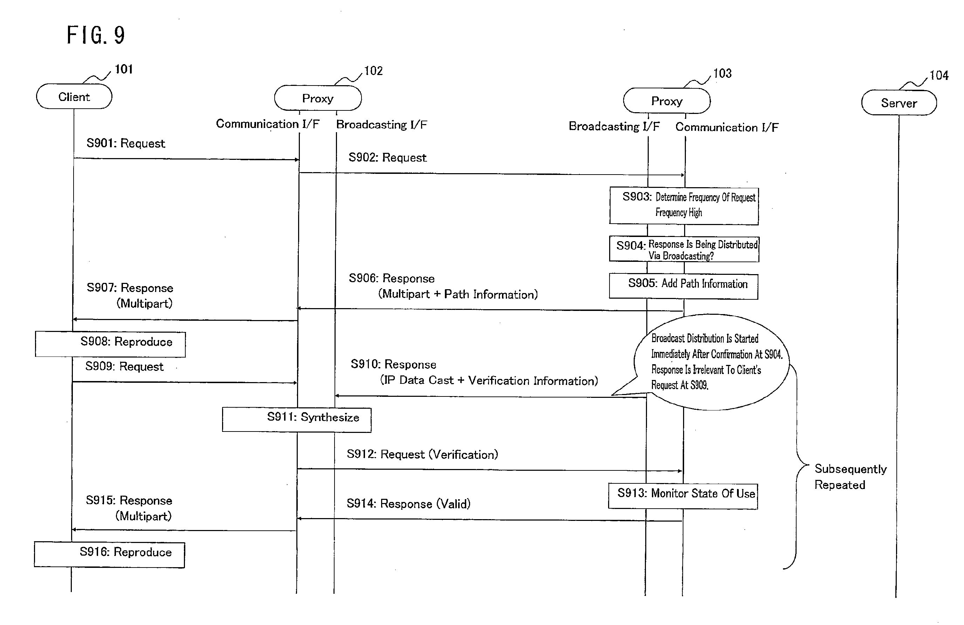

   Fig. 9 is a sequence chart showing a process which is carried out in accordance with the first embodiment of the present invention and in which response paths are changed in a case where a request for content has already been received and the request for content is received with high frequency.
Fig. 10

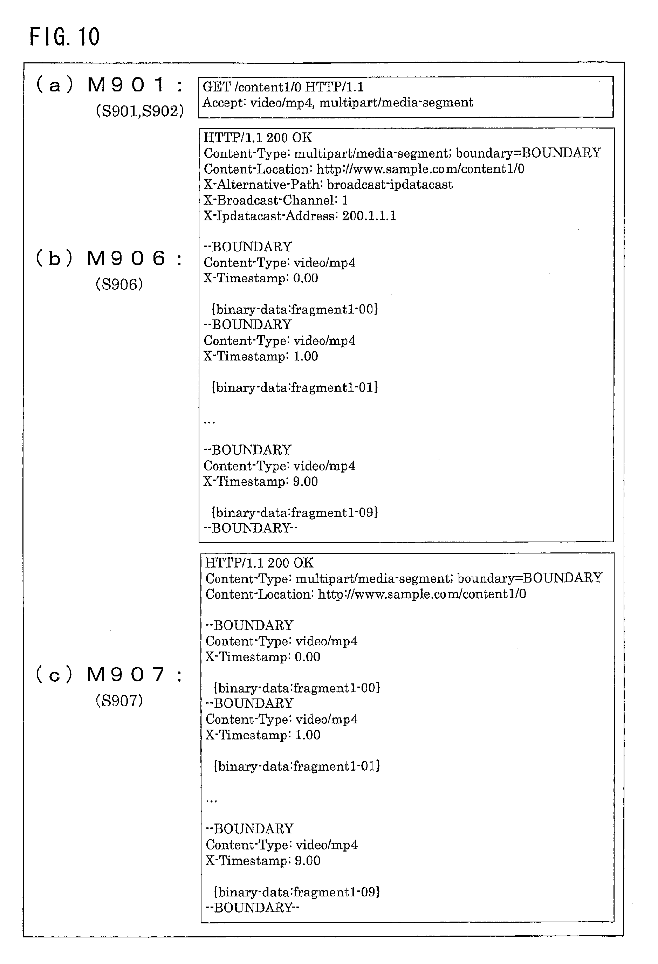

   Fig. 10 shows HTTP messages which are transmitted and received in accordance with the first embodiment of the present invention, in a process in which response paths are changed in a case where a request for content has already been received and the request for the content is received with high frequency
Fig. 11

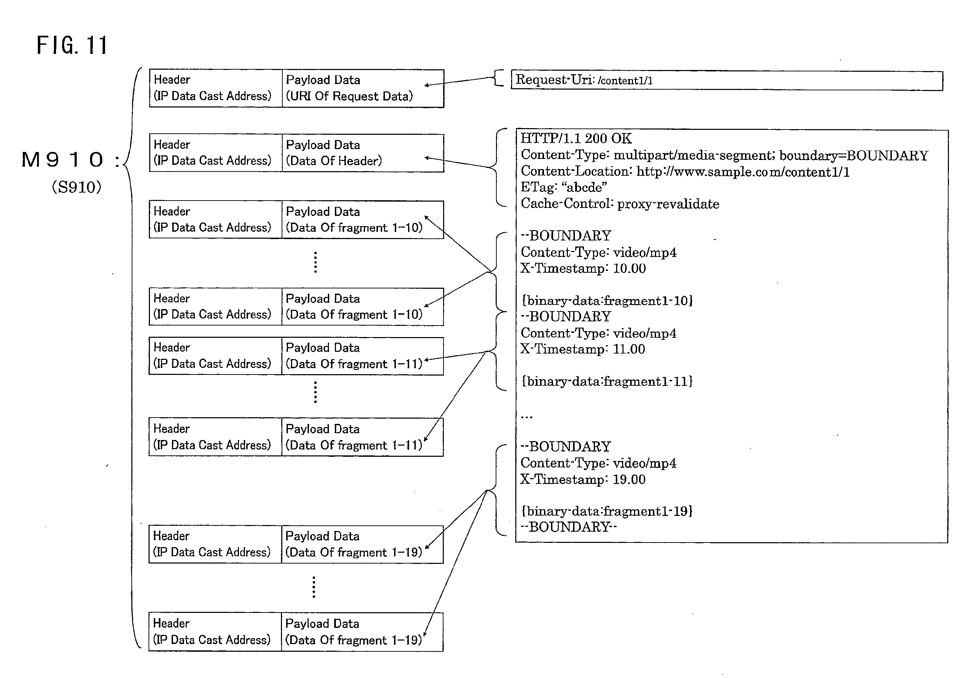

   Fig. 11 shows a response which is distributed via a broadcasting path in accordance with the first embodiment of the present invention.
Fig. 12

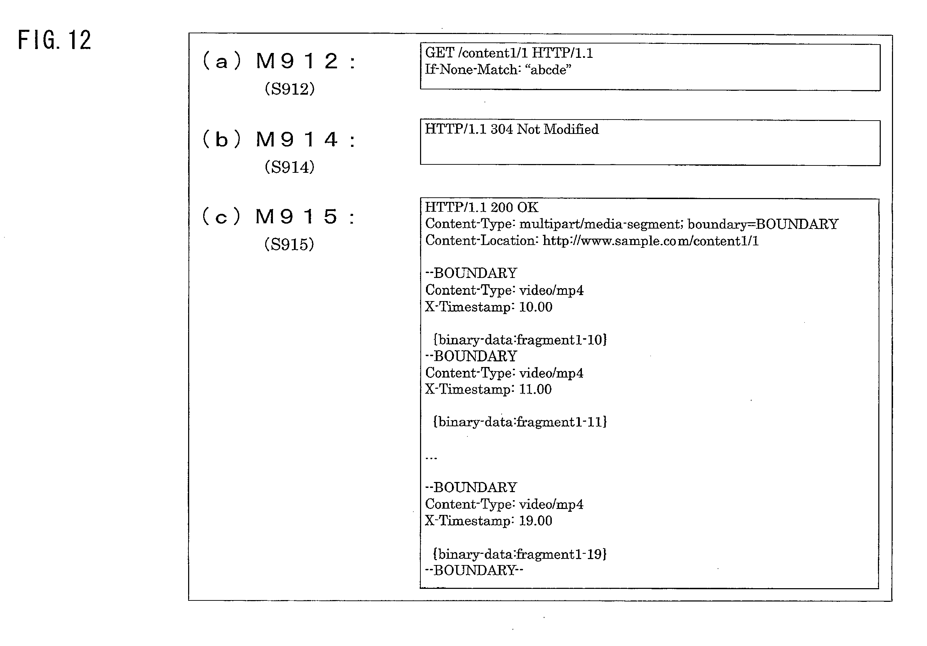

   Fig. 12 shows HTTP messages which are used to identify a user in accordance with the first embodiment of the present invention.
Fig. 13

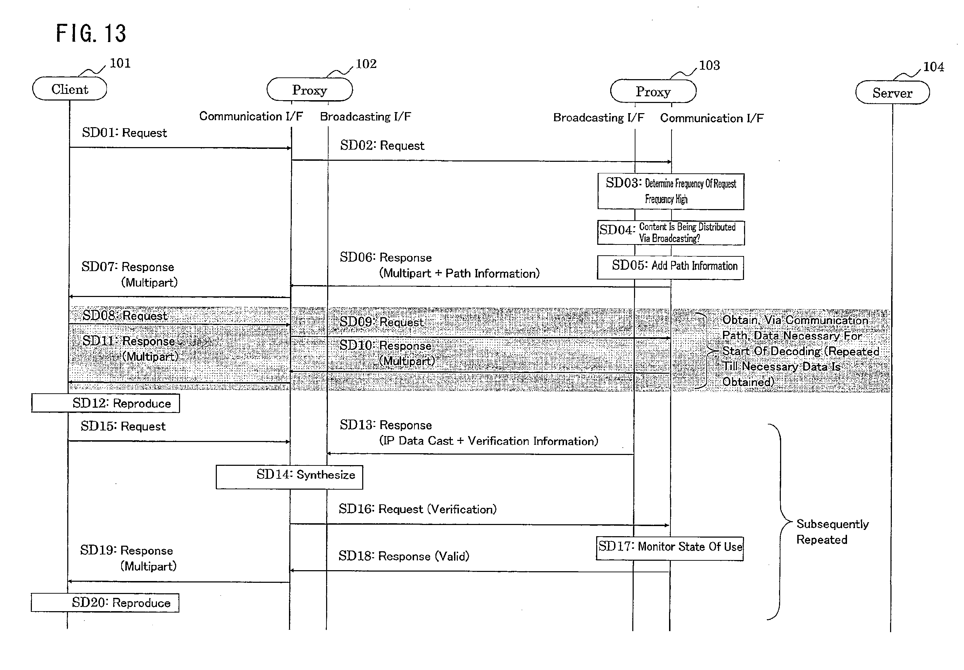

   Fig. 13 is a sequence chart showing a process in which content to be received is changed to another content in accordance with the first embodiment of the present invention, the another content already being distributed via the broadcasting path.
Fig. 14

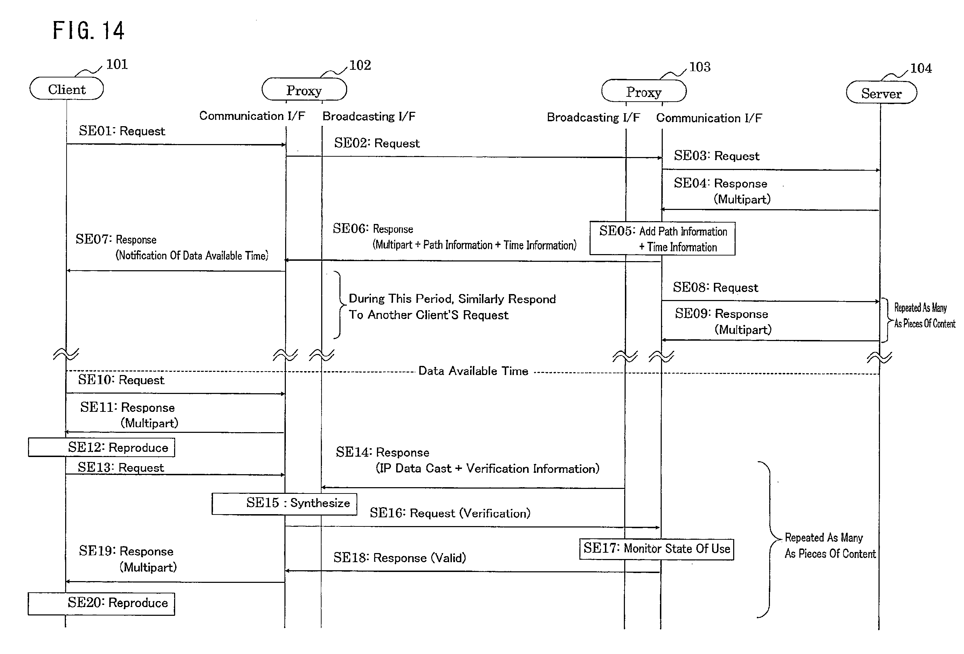

   Fig. 14 is a sequence chart showing a process carried out in accordance with the second embodiment of the present invention in a case where it is assumed that a time at which broadcast distribution is started is a data available time.
Fig. 15

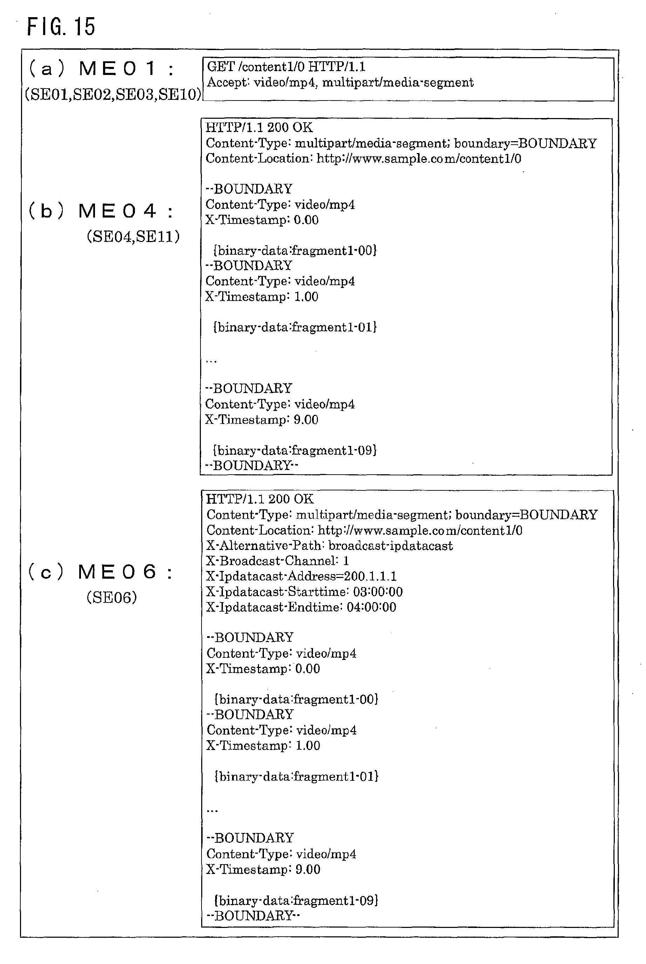

   Fig. 15 shows HTTP messages which are transmitted and received during a process carried out in accordance with the second embodiment of the present invention in a case where it is assumed that a time at which broadcast distribution is started is a data available time.
Fig. 16

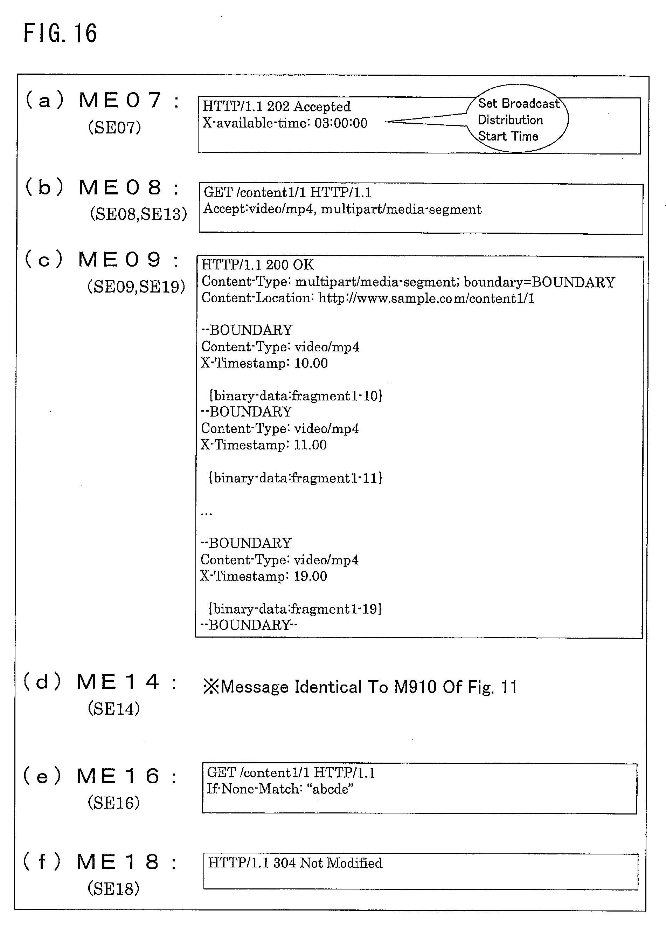

   Fig. 16 shows HTTP messages which are transmitted and received during a process carried out in accordance with the second embodiment of the present invention in a case where it is assumed that a time at which broadcast distribution is started is a data available time.
Fig. 17

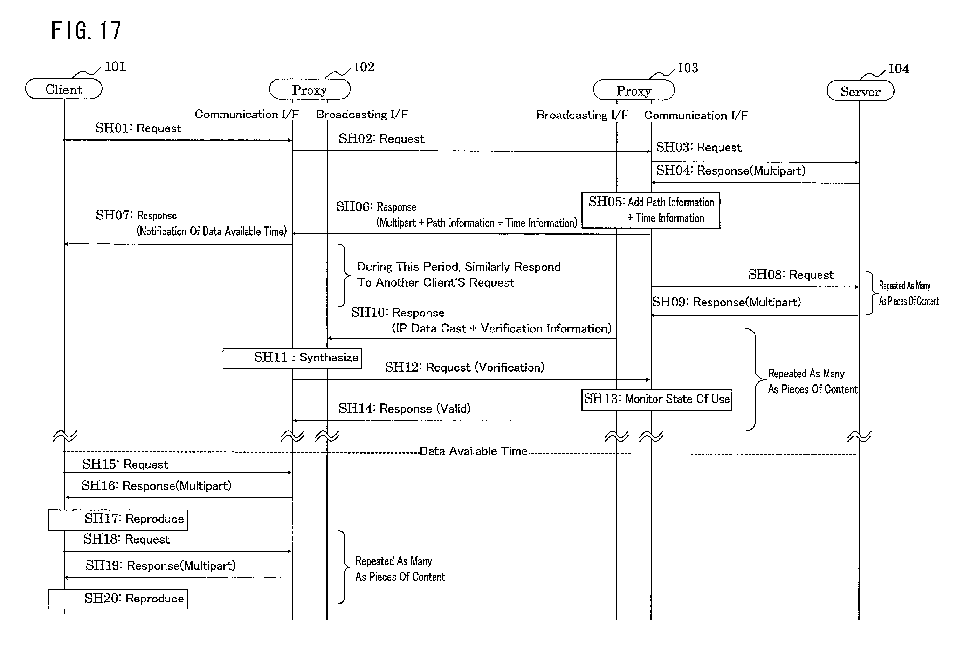

   Fig. 17 is a sequence chart showing a process carried out in accordance with the second embodiment of the present invention in a case where it is assumed that a time at which broadcast distribution is ended is a data available time
Fig. 18

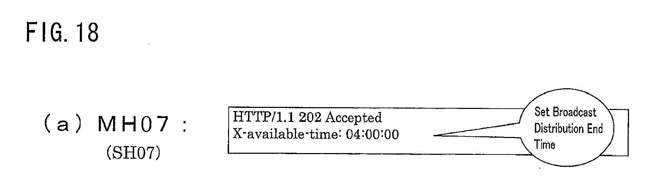

   Fig. 18 shows a message which is used in accordance with the second embodiment of the present invention to notify a client of the time at which broadcast distribution is ended as the data available time
Fig. 19

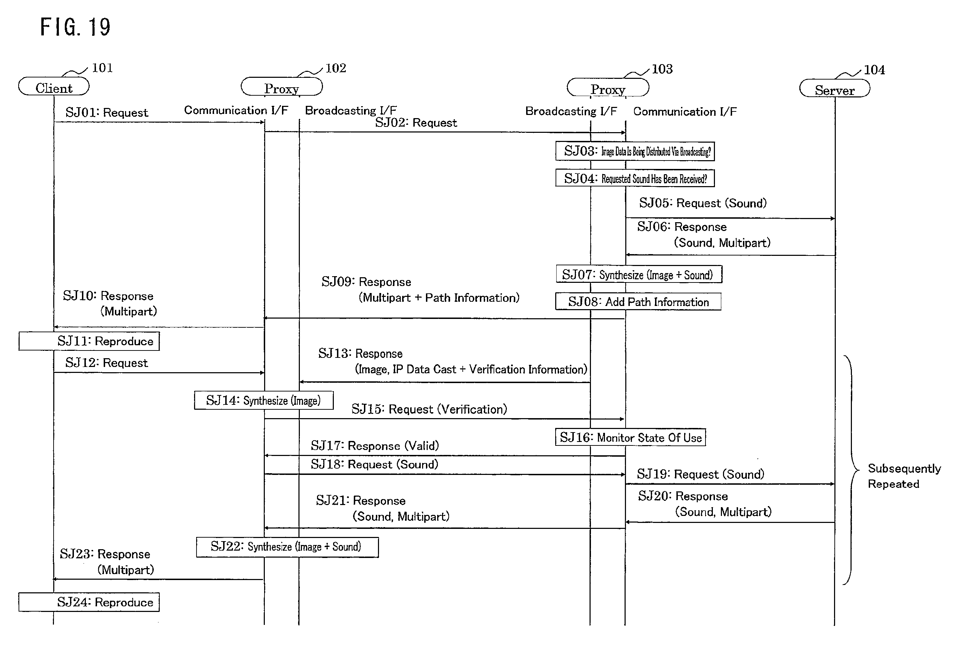

   Fig. 19 is a sequence chart showing a process in accordance with a third embodiment of the present embodiment, the process being carried out in a case where image data is distributed via broadcasting, and sound data is distributed via communication.
Fig. 20

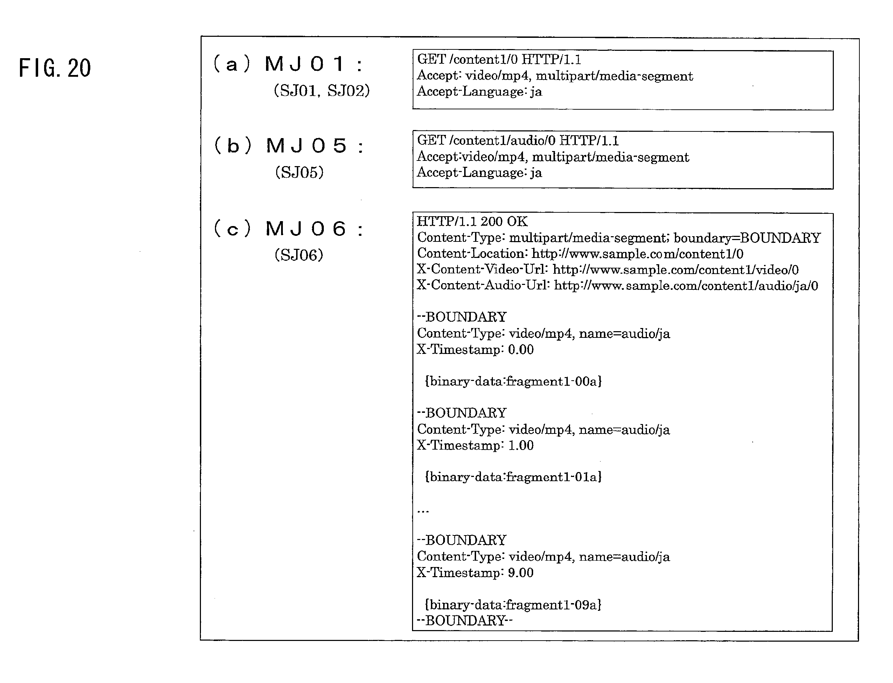

   Fig. 20 shows HTTP messages which are transmitted and received during a process carried out in accordance with the third embodiment of the present invention in a case where image data is distributed via broadcasting and sound data is distributed via communication.
Fig. 21

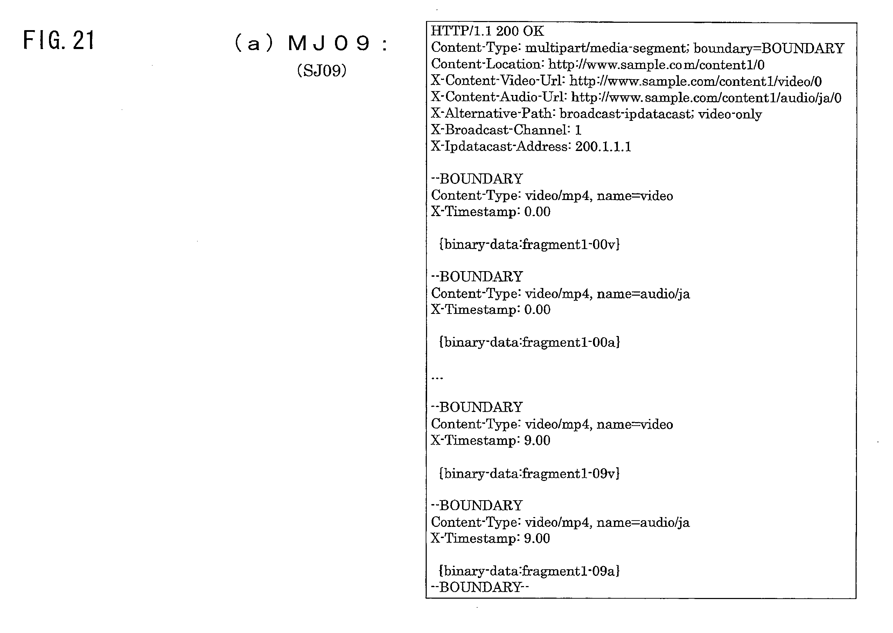

   Fig. 21 shows an HTTP message which are transmitted and received during a process carried out in accordance with the third embodiment of the present invention in a case where image data is distributed via broadcasting and sound data is distributed via communication.
Fig. 22

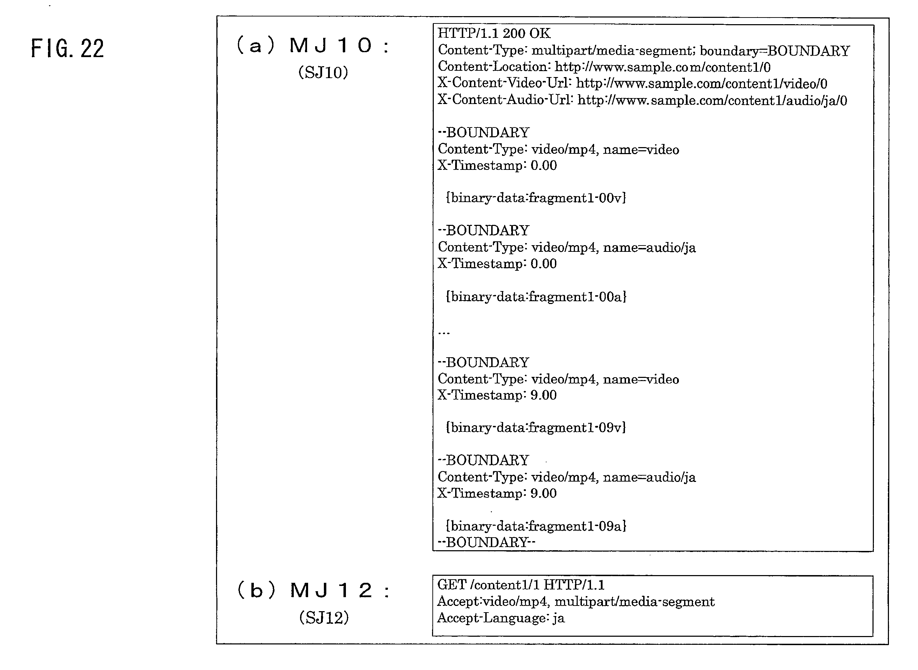

   Fig. 22 shows HTTP messages which are transmitted and received during a process carried out in accordance with the third embodiment of the present invention in a case where image data is distributed via broadcasting and sound data is distributed via communication.
Fig. 23

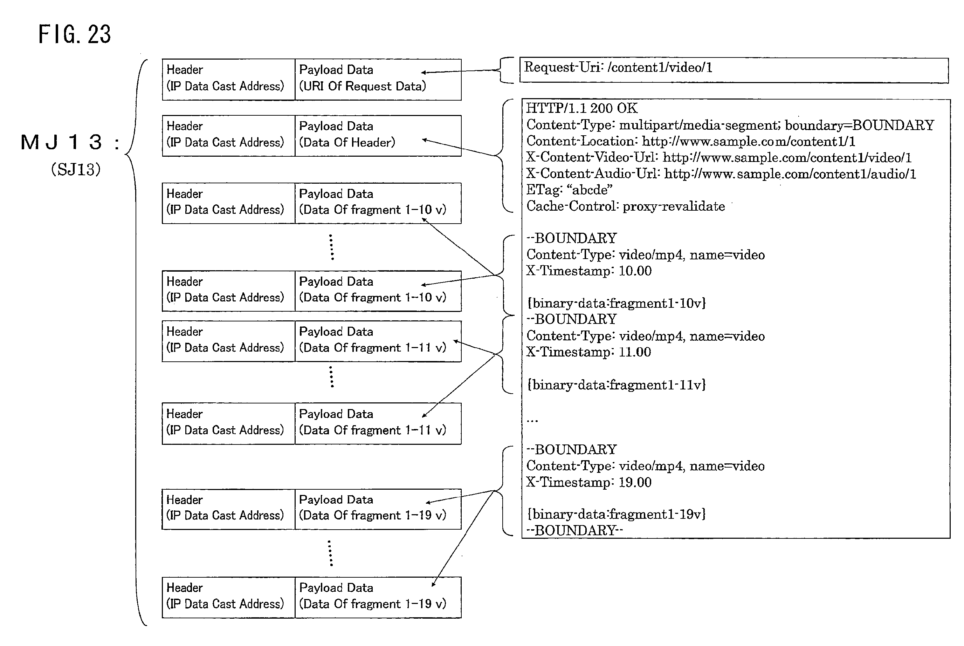

   Fig. 23 shows a response which is distributed via the broadcasting path during a process in accordance with the third embodiment of the present invention, the process being carried out in a case where image data is distributed via broadcasting and sound data is distributed via communication.
Fig. 24

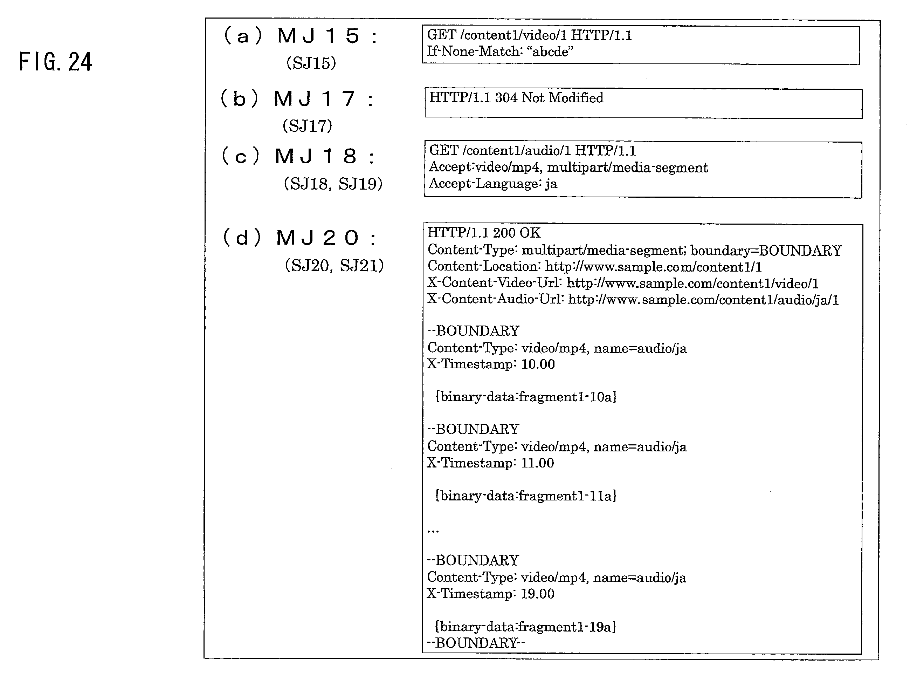

   Fig. 24 shows HTTP messages which are transmitted and received during a process carried out in accordance with the third embodiment of the present invention in a case where image data is distributed via broadcasting and sound data is distributed via communication.
Fig. 25

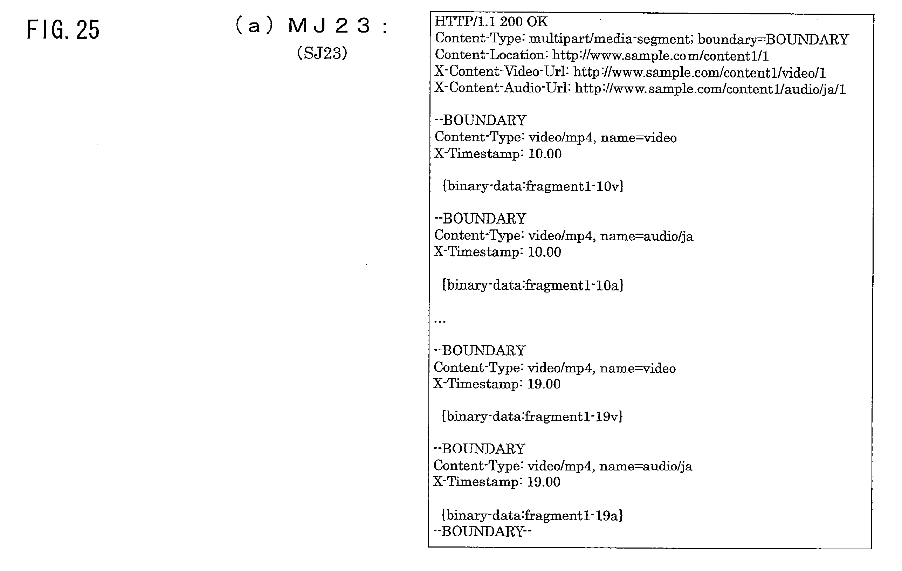

   Fig. 25 shows an HTTP message in accordance with the third embodiment of the present invention, the HTTP message being distributed after a synthesis process which is carried out in a case where image data is distributed via broadcasting and sound data is distributed via communication.
Fig. 26

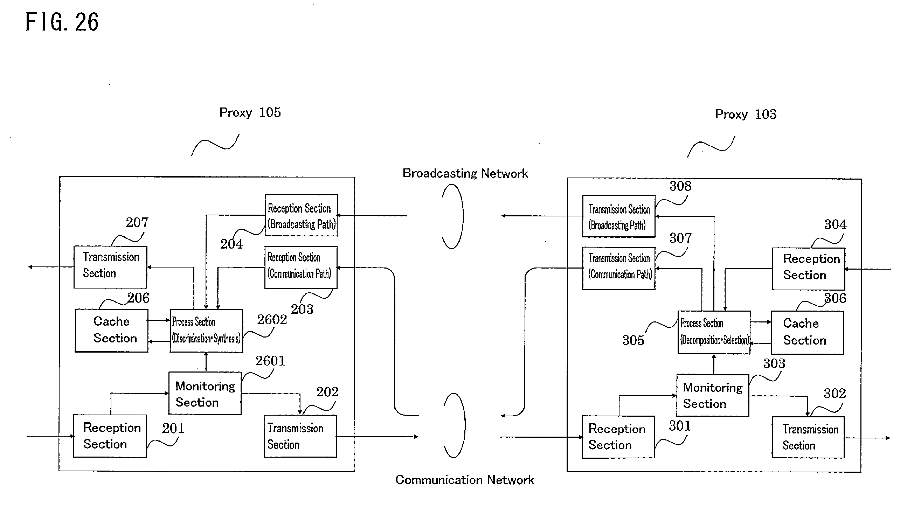

   Fig. 26 is a functional block diagram in a case where a plurality of client are connected to a client-side proxy in accordance with a fourth embodiment of the present invention.
Fig. 27

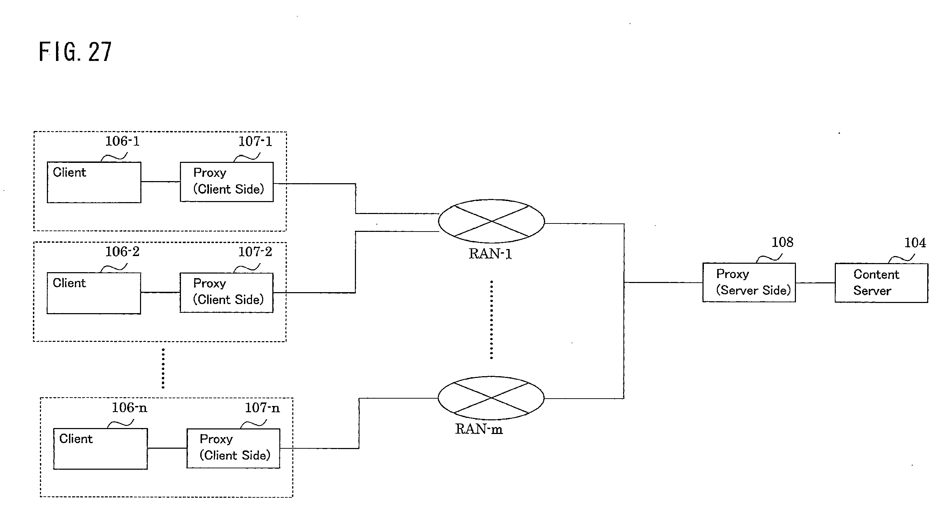

   Fig. 27 is a system configuration diagram showing an overall arrangement of a data distribution system in accordance with a fifth embodiment of the present invention, the data distribution system using a radio access communication network of a mobile device.
Fig. 28

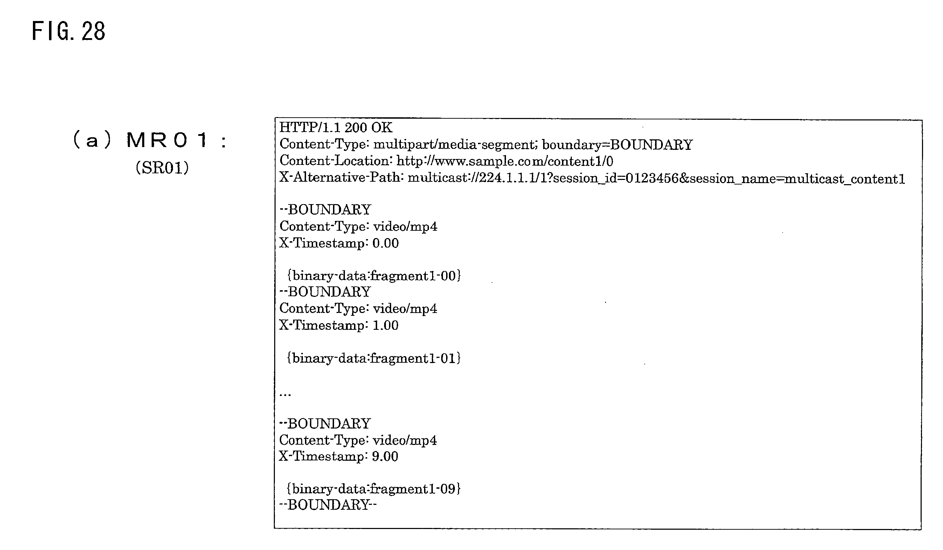

   Fig. 28 shows an HTTP message which is transmitted and received during a process carried out in accordance with the fifth embodiment of the present invention in a case where image data is distributed via broadcasting and sound data is distributed via communication.
Fig. 29
   Fig. 29 shows a structure of data in an MP4 file format including a conventional fragment video format.

### Description of Embodiments

The following description discusses the present invention with reference to drawings which show embodiments of the present invention.

### [First Embodiment]

A first embodiment of the present invention discusses an example in which content data is distributed by cooperation between a broadcasting network and a communication network by using a system for carrying out a communication between a client and a content server by use of an HTTP protocol, and distributing the content data which has been fragmented by use of an HTTP message in a MIME multipart format.

Fig. 1 is a system configuration diagram showing an overall arrangement of a data distribution system in accordance with the first embodiment of the present invention. The data distribution system in accordance with the present invention is a client server model system which includes a plurality of clients (reception terminal devices) 101 (101-1 through 101-n), client-side proxies (reception-side data relay devices) 102 (102-1 through 102-n) which are connected to respective clients and receive requests from the clients, a proxy (a distribution-side data relay device) 103 which responds, by proxy, to requests for content which have been sent from the plurality of client-side proxies 102 (102-1 through 102-n), and a content server (data distribution device) 104 which is connected to the proxy 103, manages many pieces of content, and responds to a request from a client via the proxy. According to the data distribution system in accordance with the present invention, it is possible to selectively use two distribution paths which are a communication path (a communication network, a second distribution path) and a broadcasting path (a broadcasting network, a first distribution path).

The server-side proxy 103 has a function of (i) determining, in accordance with a state of the communication path, which of the communication path and the broadcasting path to use to carry out data distribution and (ii) changing these distribution paths.

A plurality of client-side proxies 102 (102-1 through 102-n) has a function of (i) in accordance with which of the distribution paths has been specified by the content server-side proxy 103, receiving data which are distributed to the respective plurality of client-side proxies 102 (102-1 through 102-n), and (ii) distributing, to the respective clients, the distributed content data as one (1) piece of content data by cooperation between the communication network and the broadcasting network.

The data distribution system of the present invention assumes that the server 104 and the proxy 103 are typified by broadcasting stations and the client 101 and the proxy 102 are typified by television receivers. The client-side proxy 102 may be included in a television receiver (see an enclosure in a dotted line in Fig. 1). Alternatively, the client-side proxy 102 may be provided as an external device which is independent of the television receiver. For example, many recent television receivers which receive digital broadcasting have ports via which broadcasting and communication, respectively are simultaneously received. That is, many recent television receivers include a reception section for receiving broadcasting and a reception section for receiving communication. Such a television receiver is easily assumed to include a proxy. A client-side proxy which is included in a television receiver causes a client and the client-side proxy connected the client to be in a one-to-one relationship. It goes without saying that, in a case where a client-side proxy is an external device, a plurality of clients can be connected to one (1) client-side proxy.

However, since the first embodiment of the present invention mainly discusses transmission and reception of data and a message between the client-side proxy 102 and the server-side proxy 103, the following description assumes that one (1) client 101 is connected to the client-side proxy 102, unless otherwise noted. The data distribution system has a plurality of television receivers each enclosed in a doted line and including a client 101 and a proxy 102 (101-1 through 101-n, 102-1 through 102-n).

Note that, according to Fig. 1, merely one (1) proxy 103 is connected to the content server 104. However, a plurality of proxies may be provided on the server side. For example, a proxy may be prepared for each broadcasting station of a broadcasting network via which data distribution is carried out. Alternatively, a proxy may be prepared by category of content stored in a server. Moreover, a plurality of content servers 104 may be connected to the proxy 103.

Fig. 2 is a functional block diagram showing an example of a configuration of functions carried out in the client-side proxy 102 and the server-side proxy 103 of the data distribution system in accordance with the first embodiment of the present invention.

The client-side proxy 102 includes a reception section 201, a transmission section 202, a reception section (second reception means) 203, a reception section (first reception means) 204, a process section (format unification means) 205, a cache section 206, and a transmission section 207. The reception section 201 receives a request from the client 101. The transmission section 202 transmits a message to the server-side proxy. The reception section (second reception means) 203 receives a response from the server-side proxy via a communication path. The reception section (first reception means) 204 receives a response from the server-side proxy via a broadcasting path. The process section (format unification means) 205 interprets a response message transmitted via the communication path, receives message data transmitted via each of the communication path and the broadcasting path, and synthesizes messages. The cache section 206 is a section in which the process section 205 caches the message data. The transmission section 207 distributes the response message to the client. Note that the synthesis of messages is a process for unifying data formats of the messages to a single data format so that the client can similarly handle data which has been received via either the broadcasting path or the communication path. According to the present embodiment, a message received via the communication path (a message in the MIME multipart format) is transferred as it is to the client without being synthesized, and data received via the broadcasting path (IP datacasting) is synthesized into a message in the MIME multipart format. According to this, the client receives a message in the MIME multipart format via either of the communication paths.

The server-side proxy 103 includes a reception section 301, a transmission section 302, a monitoring section 303, a reception section 304, a process section 305, a cache section 306, a transmission section (second transmission means) 307, and a transmission section (first transmission means) 308. The reception section 301 receives a request from the client-side proxy. The transmission section 302 transmits a message to the server 104. The monitoring section 303 monitors the received request. The reception section 304 receives a response from the server 104. The process section 305 (selection means) decomposes the response message of the reception section 304 in response to a notification from the monitoring section 303, arranges data formats of response messages obtained by the decomposition to be suitable for the communication path and the broadcasting path, and sorts the response messages into each of the paths. The cache section 306 is a section in which the process section 305 caches the response from the server 104. The transmission section (second transmission means) 307 distributes, to the communication path, a response message in a data format which has been arranged by the process section 305 to be suitable for the communication path. The transmission section (first transmission means) 308 distributes, to the broadcasting path, a response message in a data format which has been arranged by the process section 305 to be suitable for the broadcasting path.

Fig. 3 shows a media segment in accordance with the first embodiment of the present invention. A group of fragments stored in one (1) HTTP message is defined as a media segment. A message is transmitted and received between the server-side proxy 103 and the client-side proxy 102 in units of media segments. A basic data structure of the present invention in which content data is handled is exemplified by a data structure of fragments which is illustrated in Fig. 29. According to Fig. 3, content is divided into fragments having a given length. A fragment located at the head of the content is indicated by fragment 0, and subsequent fragments are indicated by fragment 1, ..., fragment (N-1), fragment N, ..., fragment (2N-1), fragment (2N), ... etc. The first media segment (content/0) of content illustrated in Fig. 3 consists of N fragments from fragment 0 to fragment (N-1). The second media segment (content/1) of the content consists of N fragments from fragment N to fragment (2N-1). Similarly, each subsequent media segment including the last media segment also consists of N fragments.

In a case where the last media segment consists of fragments whose number does not reach N, a dummy fragment is inserted into the last media fragment so as to compensate for a shortage of fragments. Alternatively, only the last media segment may consist of fragments whose number is valid. Since the fragment which is located at the head of the content: fragment 0 contains information of a length of the entire content, the number of fragments of which the last media segment consists can be found based on the length.

Fig. 4 shows a request and a response each being used in the data distribution system in accordance with the first embodiment of the present invention. The request is transmitted from a client, and the response is in a multipart format and is distributed from the content server 104 via the content server-side proxy 103.
(a) of Fig. 4 shows an example of an HTTP message of a request which is transmitted from a client. According to (a) of Fig. 4, in which the HTTP message of the request is described by use of a "GET" command, the client requests the content server for "0"th media segment data of content "content 1". Note that a version "1.1" of "HTTP" is used as a communication protocol. A request header field of "Accept" is used for specifying a media type which can be received as a response. According to (a) of Fig. 4, a video signal "video/mp4" in a MP4 file format or a media segment "multipart/media-segment" in the MIME multipart format is requested as a response.
(b) of Fig. 4 shows an example in which one (1) media segment is described in an HTTP response message in the MIME multipart format. One (1) media segment consists of ten fragments. 401 is a "header part" of the HTTP response message. A blank row following 401 is a "delimiter" which is followed by a "data part". In order to facilitate decomposition and synthesis of the HTTP response message in the proxy, the "data part" (i) encodes a part of a fragment of the content which part is binary data so that the binary data is in the MIME (Multipurpose Internet Mail Extensions) format, (ii) describes, in an HTTP message, the binary data in the multipart format, and (iii) uses the HTTP message as the HTTP response message. A multipart format used in the description of the present invention is a format of an HTTP message in which format a plurality of pieces of partial data obtained by delimiting the "data part" of one (1) HTTP message with a character string "BOUNDARY" which is specified by "boundary=" of the header section (fragments in the present embodiment) are described. The HTTP response message of one (1) media segment consists of sequentially described fragments from a part 402-1 which is the first fragment, a part 402-2 which is the second fragment, to a part 402-10 which is the tenth fragment. Note that according to the example illustrated in (b) of Fig. 4, a length of one (1) fragment is set to one second, and a length of one (1) media segment is set to ten seconds. Drawings and descriptions of the following embodiments are based on the above lengths. However, actually, a fragment and a media segment can be set to have any respective lengths.

Fig. 5 is a sequence chart showing a process which is carried out in the data distribution system in accordance with the first embodiment of the present invention and in which response paths are changed when the server receives the first request for content. At S501 (S indicating a "step", and same applying to the following description), in a case where content that the client 101 desires to view is stored in the content server 104, the client 101 transmits a request for the content to the content server 104. The request from the client 101 passes through the client-side proxy 102 via the communication path, and then is transmitted from the client-side proxy 102 to the server-side proxy 103 which carries out a process by proxy for the content server (S502). In response to reception of the request by the reception section 301 of the server-side proxy 103, the monitoring section 303 determines whether or not a request which is identical to the request has already been received or whether or not a response corresponding to the request has already been cached in the cache 306, that is, whether or not the request was received in the past. The monitoring section 303 also determines a frequency of a request for identical content (S503).

The frequency of a request is a criterion for measuring how many requests for identical content are transmitted within a given time period. The frequency is found by dividing the number of requests by the given time period. The present embodiment uses the frequency of a request. This is because, assuming that requests for identical content concentrate in an identical time period, the present embodiment has an object of carrying out optimum content distribution by efficiently using the broadcasting path under such a condition of concentration. That is, according to the present embodiment, distribution via the broadcasting path is selected in a case where a phenomenon of a high frequency of a request is detected, the phenomenon occurring when traffic of the communication network is large. This prevents an increase in traffic on the communication network and enables efficient content distribution. Note that a phenomenon to be detected is not limited to the above example provided that the phenomenon to be detected occurs when traffic on the communication network is large. For example, in a case where a period from a time at which a segment is distributed via the communication path to a time at which a request for a subsequent segment is received is longer than usual, the traffic on the communication network seems to be large. Therefore, a phenomenon may also be detected such that the period exceeds a given threshold.

According to Fig. 5, no request for identical content has been received. Therefore, the process section 305 of the server-side proxy 103 receives, from the monitoring section 303, a notification of the frequency of a request, "Low (No) frequency of request". In response to the notification, the process section 305 causes the transmission section 302 to transmit, to the content server 104, the request which the reception section 301 has received from the client 101 (S504).

The content server 104 returns, to the server-side proxy 103, a response which corresponds to the request from the client 101 and includes content data in the MIME multipart format (S505). Since the frequency of a request for identical content is not high at this time, the process section 305 of the server-side proxy 103 selects distribution of the response not via the broadcasting path but via the communication path. The process section 305 of the server-side proxy 103 which has caused the reception section 304 to receive the response from the content server 104 causes the transmission section (communication path) 307 to return the response to the client-side proxy 102 via the communication path (S506). The client-side proxy 102 returns the received response to the client 101 (S507). The client 101 reproduces the content (S508). The client 101 requests subsequent content data (S509).

Fig. 6 shows HTTP messages which are transmitted and received, during operation which is illustrated in the sequence chart of Fig. 5 and carried out by the data distribution system in accordance with the first embodiment of the present invention, in a process in which the response paths are changed when the server receives the first request for content.

M501 (M indicating an "HTTP message", same applying to the following description) of (a) of Fig. 6 shows an example of an HTTP request message which is transmitted at S501 of Fig. 5 from the client 101 to the content server 104 via the communication path. The request message M501 is an HTTP request message which is transmitted from the client 101 to the content server 104 via the client-side proxy 102 and the server-side proxy 103 (see Fig. 5), and an identical M501 is transmitted among these devices in communication at S501, S502, and S504.

M505 of (b) of Fig. 6 shows an example of an HTTP response message which is in the MIME multipart format and is distributed in Fig. 5 from the content server 104 to the client 101 via the communication path. The response message is an HTTP request message which is transmitted in Fig. 5 from the content server 104 to the client 101 via the server-side proxy 103 and the client-side proxy 102, and an identical M505 is transmitted among these devices in communication at S505, S506, and S507.

M509 of (c) of Fig. 6 shows an example of an HTTP request message for the second media segment, the HTTP request message being transmitted in Fig. 5 from the client 101 to the content server 104 via the communication path. Fig. 5 merely shows S509 at which a request is transmitted from the client 101 to the client-side proxy 102. However, as in the case of S501, the request is an HTTP request message which is transmitted from the client 101 to the content server 104 via the client-side proxy 102 and the server-side proxy 103, and the request is a request message which is transmitted among these devices.

Fig. 7 is a sequence chart showing a process which is carried out in the data distribution system in accordance with the first embodiment of the present invention and in which response paths are changed in a case where a request for content has already been received and the request for content is received with low frequency. Fig. 7 shows a process which is carried out in a state in which a request for identical content has already been received from another client and the request for identical content is received from a plurality of clients with frequency which is not high.

The client 101 transmits a request for content to the content server 104. First, the client 101 transmits the request for content to the client-side proxy 102 (S701). The client-side proxy 102 which has received the request for content transmits the request for content to the server-side proxy 103 (S702). The reception section 301 of the server-side proxy 103 receives the request for content which request has been transmitted from the client 101 via the client-side proxy 102. In response to the reception of the request, the monitoring section 303 of the server-side proxy 103 determines whether or not a request which is identical to the request has already been received, i.e., whether or not a response corresponding to the request has already been cached in the cache 306, that is, whether or not the request was received in the past. The monitoring section 303 also determines a frequency of a request for identical content (S703).

According to Fig. 7, the content server 104 has already received, from another client, a request for content, and the server-side proxy 103 has already returned a response to the request for content which request was received first. That is, the cache 306 already retains a response corresponding to a request for identical content. Further, Fig. 7 assumes that it has been determined that the request for identical content has been received with low frequency.

In response to a notification from the monitoring section 303 of a frequency of a request: "Low frequency of request", the process section 305 of the server-side proxy 103 selects distribution of a response not via the broadcasting path but via the communication path. Since the cache section 306 already retains a response corresponding to the request, without transmitting the request to the content server 104, the process section 305 of the server-side proxy 103 extracts, from the cache 306, a response which has been cached, and causes the transmission section (communication path) 307 to distribute the extracted response to the client 101 via the client-side proxy 102 (S704 and S705). The client 101 which has received an HTTP response message in the MIME multipart format extracts content data and reproduces content, i.e., a video (S706). Subsequently, the client 101 distributes a request for a subsequent media segment to the content server 104 via the client-side proxy 102 (S707).

Fig. 8 shows HTTP messages which are transmitted and received, during operation which is illustrated in the sequence chart of Fig. 7 and carried out by the data distribution system in accordance with the first embodiment of the present invention, in a process in which response paths are changed in a case where a request for content has already been received and the request for the content is received with low frequency.

M701 of (a) of Fig. 8 shows an example of an HTTP request message which is transmitted in Fig. 7 from the client 101 to the content server 104 via the communication path. Eventually, this request is not transmitted to the content server 104 (see Fig. 7). The request message is an HTTP request message which is transmitted in Fig. 7 from the client 101 to the server-side proxy 103 via the client-side proxy 102, and an identical request M701 is transmitted among these devices at S701 and S702.

M704 of (b) of Fig. 8 shows an example of an HTTP response message which is in the MIME multipart format and is distributed in Fig. 7 from the server-side proxy 103 to the client 101 via the communication path. The response message, which has been distributed once in Fig. 7 from the content server 104 to the server-side proxy 103 in response to a request from another client, has been retained in the cache 306 by the server-side proxy 103. In a case where the server-side proxy 103 receives a request for identical content from the client 101, the server-side proxy 103 responds to the request by proxy for the content server 104, and distributes, via the client-side proxy 102 to the client 101 which has transmitted the request for content, a response retained in the cache 306. An identical M704 serving as the HTTP response message is distributed among these devices at S704 and S705.

M707 of (c) of Fig. 8 shows an example of an HTTP request message for the second media segment, the HTTP request message being transmitted in Fig. 7 from the client 101 to the content server 104 via the communication path. Eventually, this request is not transmitted to the content server 104, either. Fig. 7 merely shows S707 at which a request is transmitted from the client 101 to the client-side proxy 102. However, as in the case of S701, the request is an HTTP request message which is transmitted from the client 101 to the server-side proxy 103 via the client-side proxy 102.

Fig. 9 shows a process which is carried out in the data communication system in accordance with the first embodiment of the present invention and in which response paths are changed in a case where a request for content has already been received and the request for content is received with high frequency. Fig. 9 shows a process which is carried out in a state in which a request for identical content has already been received from another client and the request for identical content is received from a plurality of clients with high frequency.

The client 101 transmits a request for content to the content server 104. Eventually, this request is not transmitted to the content server 104 (see Fig. 9). First, the client 101 distributes the request for content to the client-side proxy 102 (S901). The client-side proxy 102 which has received the request for content transmits the request for content to the server-side proxy 103 (S902). In response to reception of the request for content by the reception section 301 of the server-side proxy 103, the request having been transmitted from the client 101 via the client-side proxy 102, the monitoring section 303 determines whether or not a request which is identical to the request has already been received (i.e., whether or not a response corresponding to the request has already been cached in the cache 306), that is, whether or not the request was received in the past. The monitoring section 303 also determines a frequency of a request for identical content (S903).

Assume that an identical request has been received many times and a frequency of the identical request has exceeded a given threshold by reception of a request at S902. That is, a threshold of a frequency of the request is herein set in advance, and it is determined, by a comparison between the set threshold and the frequency at present, whether the frequency of the request is high or low. In this case, since a response message corresponding to the request has already been cached in the cache section 306, the request is not transmitted to the content server 104. In response to a notification from the monitoring section 303 of a frequency of a request: "High frequency of request", the process section 305 of the server-side proxy 103 selects distribution of a response not only via the communication path but also via the broadcasting path and then carries out the following process.

First, the process section 305 of the server-side proxy 103 determines whether or not a response corresponding to a received request is being distributed via the broadcasting path (S904). If no response is being distributed, the process section 305 identifies or secures the broadcasting path, and then starts, via the broadcasting path, distribution of content data following a response distributed at S906. If the response is being distributed via the broadcasting path, the process section 305 identifies the broadcasting path. Note that it is determined, by monitoring a state in which the broadcasting path is used, whether or not the distribution via the broadcasting path is suspended. Therefore, the distribution is not necessarily suspended in sync with a change in frequency of a request. This makes it necessary to determine whether or not a response corresponding to a received request is being distributed via the broadcasting path (S904). It is described later how to monitor the state in which the broadcasting path is used.

Next, since the cache 306 already retains a response corresponding to a request from the client 101, without transmitting the request to the content server 104, the process section 305 of the server-side proxy 103 extracts, from the cache 306, a response which has been cached. Then, the process section 305 of the server-side proxy 103 adds, to the extracted response, information as to a path selected in accordance with the notification from the monitoring section 303 of the frequency of the request. Here, the broadcasting path is selected since the notification is "High frequency of request". The process section 305 adds, to a header of the response message corresponding to the request, the following information as to the broadcasting path, the information indicating the broadcasting path identified or secured at S904 (S905).
X-Alternative-Path: broadcast-ipdatacast
X-Broadcast-Channel: 1
X-Ipdatacast-Address: 200.1.1.1

A specific example of the response message is shown in (b) of Fig. 10 (described later). The process section 305 adds, to the header of the HTTP response message, (i) information indicating that distribution is carried out via the broadcasting path (X-Alternative-Path: broadcast-ipdatacast), (ii) information as to the broadcasting path identified or secured at S904, i.e., information for discriminating the broadcasting path via which data is transmitted (X-Broadcast-Channel: 1), (iii) and information for discriminating the data in the broadcasting path (X-Ipdatacast-Address: 200.1.1.1). Then, the transmitting section 307 of the communication path distributes, to the client-side proxy 102 via the communication path, the response having the header to which broadcasting path information has been added.

The above example of information indicative of the broadcasting path shows a case of broadcast distribution by IP datacasting. As described later, the above example shows a case where a response message including multi-part content data is IP-packetized and is then distributed to a channel 1 as a destination address 200.1.1.1. The client-side proxy 102 discriminates an IP packet by use of the destination address. Channel information may be replaced with information which directly specifies a frequency band. Note that a channel and an IP address which are used for broadcast distribution may be set in advance in the server-side proxy 103. Alternatively, the server-side proxy 103 may grasp, for example, information as to availability of each channel and determine, every time, a channel and an IP address. Moreover, in a case where a terminal of a client is a mobile device which is portable, a broadcasting path, a channel, and an IP address which are suitable for a current location of the client can be determined by the server-side proxy 103 which has obtained the current location of the terminal of the client by use of location information notifying function (Geolocation API) of the mobile device.

Besides, a response message including content data can also be distributed via broadcasting in accordance with a data carrousel method which is used for data broadcasting of digital broadcasting (not illustrated). The following is an example of information to be added to a header in this case.
X-Alternative-Path: broadcast-datacarrousel
X-Broadcast-Channel: 1
X-Dataevent-Id: 200

The above example is arranged such that a response message including multi-part content data is encapsulated in a carousel, and is then distributed to the channel 1 as an event ID 200. The client-side proxy 102 discriminates the carousel by use of the event ID.

In response to the response message from the server-side proxy 103 to which response message the path information has been added, the process section 205 of the client-side proxy 102 deletes, from the response message, the header which has been added at S905. The process section 205 of the client-side proxy 102 transmits, to the client 101, a response from which the path information has been deleted (S907).

The client 101 which has received the HTTP response message in the MIME multipart format extracts content data and reproduces content, i.e., a video (S908).

Further, with reference to the information which has been added to the header at S905, the process section 205 of the client-side proxy 102 discriminates and obtains data which is subsequently transmitted via the broadcasting path (S910). The process section 205 uses, for the discrimination, an IP data cast address (a destination address) added to each IP packet. Note that, since no routing process needs to be carried out during broadcast distribution, a header of an IP packet other than the first IP packet may be replaced with an identifier indicating that the header is identical to a header of the first IP packet (this process reduces a header data amount), and the IP packet is discriminated by use of the identifier (not illustrated). Then, the process section 205 of the client-side proxy 102 synthesizes received data into a response message in the multipart format (S911).

Note that in this case, the response message to which information (Cache-Control: proxy-revalidate) and discrimination tag information (ETag: "abcde") are added is distributed via broadcasting. The information (Cache-Control: proxy-revalidate) indicates that verification needs to be carried out in the server-side proxy 103 before use of the response message, and the discrimination tag information (ETag: "abcde") is used for the verification. A specific example of the response message is shown in Fig. 11 described later. (Note here that for simple explanation, the discrimination tag information ETag first appears in the process carried out by the server-side proxy 103. However, ETag is originally tag information which is adds to each message by the content server 104. Therefore, it is possible to consider that ETag, which is not illustrated in any of the drawings of the present embodiment, is added in advance to each response message to be distributed from the content server 104. Alternatively, in a case where no ETag is added to each message, the server-side proxy 103 may add, to the each message, a tag (e.g., X-proxy-ETag) which is unique to the server-side proxy 103. In a case where the information indicating that verification needs to be carried out is added to the response message, the client-side proxy 102 transmits, to the server-side proxy 103 without fail, a request for verification for verifying whether or not a response synthesized at S911 is valid (S912). In response to the request for verification, the server-side proxy 103 determines, in accordance with discrimination tag information described in the request message, whether or not the response synthesized at S911 is valid. The server-side proxy 103 which has determined that the response synthesized at S911 is valid distributes, to the client-side proxy 102, a response indicative of the validity (S914). Simultaneously with this, the server-side proxy 103 monitors a state of reception of the request for verification, so as to determine to what degree a client uses content data distributed via the broadcasting path. The server-side proxy 103 which receives no request for verification determines that there is no longer a client that receives the content distributed via the broadcasting path. Then, the server-side proxy 103 suspends the distribution via the broadcasting path. Note that it may be determined, in accordance with, for example, whether or not a state in which the server-side proxy 103 has received no request for verification lasts for a predetermined period, whether or not a situation occurs in which the server-side proxy 103 receives no request for verification.

The client 101 transmits, to the client-side proxy 102, a request to the content server 104 for a subsequent media segment (S909), receives a response corresponding to the request (S915), and reproduces content (S916). In this case, the client-side proxy 102, which merely returns, to the client 101, a response which has been received via the broadcasting path, does not transmit, to the server-side proxy 103 and the content server 104, the request which has been transmitted from the client 101 (see Fig. 9). Furthermore, the request transmitted at S909 and processes carried out at S910 through S914 do not necessarily need to synchronize with each other. It is only necessary that the process carried out at S910 through S914 be finished before the client-side proxy 102 returns the response at S915 to the request transmitted at S909.

Fig. 10 through Fig. 12 show examples of HTTP messages and distribution data on a broadcasting path each of which is transmitted and received, during operation which is illustrated in the sequence chart of Fig. 9 and carried out by the data distribution system in accordance with the first embodiment of the present invention, in a process in which response paths are changed in a case where a request for content has already been received and the request for content is received with high frequency.

M901 of (a) of Fig. 10 shows an example of an HTTP request message which is transmitted at S901 of Fig. 9 from the client 101 to the content server 104 via the communication path. The request is not transmitted to the content server 104 (see Fig. 9). The request message is an HTTP request message which is transmitted in Fig. 9 from the client 101 to the server-side proxy 103 via the client-side proxy 102, and an identical request M901 is transmitted among these devices at S901 and S902.

M906 of (b) of Fig. 10 shows an example of an HTTP response message which is in the MIME multipart format and is distributed at S906 of Fig. 9 from the server-side proxy 103 to the client-side proxy 102 via the communication path. The response message excluding information of the header part which information indicates the broadcasting path has been distributed once in Fig. 9 from the content server 104 to the server-side proxy 103 in response to a request from another client, and the response message has been retained in the cache 306 by the server-side proxy 103. In a case where the server-side proxy 103 receives a request for identical content from the client 101, the server-side proxy 103 responds to the request by proxy for the content server 104, and distributes, to the client-side proxy 102 of the client 101 which has transmitted the request for content, a response retained in the cache 306. In this case, the process section 305 has been notified, by the monitoring section 303 which has determined a frequency of the requests at S903, that the frequency of the request for content is high selects the broadcasting path and adds at S905, to a header part of the response message M906, path information indicative of the broadcasting path.

M907 of (c) of Fig. 10 shows an example of an HTTP response message which is in the MIME multipart format and is distributed via the communication path from the client-side proxy 102 to the client 101 at S907 of Fig. 9. The response message is obtained as below. In response to reception by the client-side proxy 102 of a response message to which the path information is added and which has been distributed from the server-side proxy 103 at S906 of Fig. 9, the process section 205 deletes all path information added at S905, and reconstitutes the response message. The HTTP response message is thus obtained.

Fig. 11 shows a data format of a response which is distributed via broadcasting during operation which is illustrated in the sequence chart of Fig. 9 and carried out by the data distribution system in accordance with the first embodiment of the present invention. At S910 of Fig. 9, data M910 which is obtained by IP-packetizing the HTTP response message in the MIME multipart format is distributed via broadcasting by IP datacasting. Fig. 11 shows a relationship between an HTTP message to be distributed and broadcast distribution data M910 obtained by IP-packetizing. An IP packet consists of (i) a header part in which an IP data cast address is stored and (ii) payload data in which a body of data desired to be transferred is stored. In the payload data, each of the following pieces of data (i) through (iii) are stored so as to be divided into one or more IP packets. The pieces of data (i) through (iii) are: (i) request data URI which is a URI specified by an original request message requesting a response message, (ii) data of a header part of the HTTP response message to be distributed, and (iii) data of each fragment of a data part of the HTTP response message. The number of pieces of fragment data stored in the payload data is equal to the number of media segments. Further, IP packets which are separately stored in the respective pieces of fragment data bring about an advantage such that, in a case where data is partially lost during broadcast distribution, content can be reproduced by restoring data other than fragment data corresponding to the lost data.

Moreover, as described earlier, the HTTP response message to be distributed includes (i) information (Cache-Control: proxy-revalidate) indicating that verification needs to be carried out in the server-side proxy 103 before use of the HTTP response message and (ii) discrimination tag information (ETag: "abcde") which is used for the verification.

Fig. 12 also shows HTTP messages which are received and transmitted during operation which is illustrated in the sequence chart of Fig. 9 and carried out in the data distribution system in accordance with the first embodiment of the present invention. In particular, (a) and (b) of Fig. 12 show examples of an HTTP message which is used to identify a user of data transmitted via the broadcasting path.

M912 of (a) of Fig. 12 shows an example of an HTTP request message for verification, the HTTP request message being transmitted via the communication path from the client-side proxy 102 to the server-side proxy 103 at S912 so as to verify whether or not the response synthesized at S911 of Fig. 9 is valid. According to the example, the verification is carried out by inquiring whether or not a response message to which discrimination tag information identical to ETag "abcde" is added exists in the server-side proxy 103. (If the discrimination tag information identical to ETag "abcde" exists, it is confirmed that the response message in the client-side proxy 102 has been obtained from the server-side proxy 103, i.e., it is determined that the response message is valid.)

M914 of (b) of Fig. 12 shows an example of an HTTP response message which (i) is a response that is transmitted at S914 and indicates a result of the verification of the request for verification at S912 of Fig. 9 and (ii) is transmitted from the server-side proxy 103 to the client-side proxy 102 via the communication path. The example shows that identical discrimination tag information exists in the server-side proxy 103.

M915 of (c) of Fig. 12 shows an example of a response message which (i) is a response that is transmitted at S915 to the request transmitted at S909 of Fig. 9 and (ii) is in the MIME multipart format and is distributed from the client-side proxy 102 to the client 101.

As described above, the data distribution system in accordance with the present embodiment is arranged such that distribution paths are adaptively changed in accordance with a frequency of a request for the content. According to this, in a case where it is determined that the frequency of the request is not so high as to overload a communication band, content data is distributed via the communication path at a high speed, whereas in a case where the frequency of the request is so high as to overload the communication band, content is simultaneously distributed via broadcasting. This enables optimum content distribution which considers both a content transmission speed and a state of the communication band.

The following description discusses, with reference to Fig. 13, a process in which content to be received is changed to another content in the data distribution system in accordance with the first embodiment of the present invention, the another content already being distributed via the broadcasting path.

Fig. 13 is a sequence chart showing a process (a point at which) content to be received is changed to another content in the data distribution system in accordance with the first embodiment of the present invention, the another content already being distributed via the broadcasting path.

The client 101 requests change of content which is being distributed. Specifically, a request which is M901 of Fig. 9 and in which "/content1/0" has been changed to "/content2/0" is transmitted at SD01 and SD02. (That is, the client has changed content to receive from content 1 to content 2.) As in the case of the explanation of Fig. 9, a frequency of a request for the content 2, which is newly requested, is determined at SD03. A result of the determination shows that the frequency of the request is high. Then, it is determined at SD04 whether or not the content 2 is being distributed via the broadcasting path, and the present embodiment assumes that the content 2 is being distributed via the broadcasting path. At SD05, information indicative of the broadcasting path which has been determined at SD04 and via which the content 2 is already being distributed is added to a header of a response at SD05. Then, a response message in the multipart format serving as the message (including a fragment of "/content2/0") is returned to to the client 101 via SD06 and SD07.

Here, as in the case of the explanation of Fig. 9, the client-side proxy 102 can change the response paths so that distribution data is received via the broadcasting path. However, distribution via the broadcasting path has a problem such that data reception and reproduction of received data require much time. For example, in case of obtaining data which is distributed via the broadcasting path, it may take much time to find the first piece of data out of pieces of data which are sequentially distributed. Meanwhile, in case of using the broadcasting path via which data is distributed in real time in accordance with reproduction time, the problem occurs, for example, even in a case where a client requests immediate distribution of the first piece of data for initial buffering at the time of start of decoding, it is impossible to receive only the first piece of data at a high speed. In view of this, according to Fig. 13 of the first embodiment, during a change of content to be received, the client-side proxy 102 determines a data amount necessary for the start of decoding. Even in a case where data is already being distributed via the broadcasting path, data necessary for the start of decoding is received via the communication path by repeatedly carrying out steps SD08 through SD11. In a case where processes SD08 through SD11 of Fig. 13 are carried out for the given number of times, the first piece of data is transmitted via communication at a high speed. This reduces time during which the client waits for data in a case where the client changes content to receive (reproduce, view). This allows the client 101 to immediately start reproduction.

According to the first embodiment described above, content which is requested with low frequency is subjected to high-speed distribution via communication, whereas content which is requested with high frequency is simultaneously distributed via broadcasting. This reduces an increase in traffic on a communication network. Furthermore, high-speed transmission of only the first piece of data via communication during a change of content allows the client to wait for data for a shorter time. According to the present invention, which is based on communication by HTTP, it seems to the client that one-to-one communication by HTTP is carried out.

### [Second Embodiment]

A second embodiment of the present invention discusses an example in which in a system for carrying out a communication between a client and a content server by use of an HTTP protocol, and distributing content data which has been fragmented by use of an HTTP message in a MIME multipart format, the client is notified of a distribution time at which the content data is distributed via a broadcasting network. As in the case of the first embodiment, the following description discusses, with reference to the system configuration diagram of Fig. 1, an overall arrangement of a data distribution system in accordance with the present embodiment, and discusses, with reference to the functional block diagram of Fig. 2, a block configuration of functions carried out in proxies.

Fig. 14 is a sequence chart showing a process carried out in a case where the data distribution system in accordance with the second embodiment of the present invention assumes that a time at which broadcast distribution is started is a data available time (a time at which reproduction of data can be started).

In a case where content that the client 101 desires to view is stored in the content server 104, the client 101 distributes a request for the content to the content server 104 (SE01). The request from the client 101 passes through the client-side proxy 102 via the communication path, and then is transmitted from the client-side proxy 102 to the server-side proxy 103 which carries out a process by proxy for the content server (SE02). In response to reception of the request by the reception section 301 of the server-side proxy 103, the monitoring section 303 determines whether or not a request which is identical to the request has already been received. According to Fig. 14, since no request for identical content has been received, the process section 305 of the server-side proxy 103 causes the transmission section 302 to transmit, to the content server 104, the request which the reception section 301 has received from the client 101 (SE03).

The content server 104 returns, to the server-side proxy 103, a response which corresponds to the request from the client 101 and includes content data (a media segment) in the MIME multipart format (SE04). The process section 305 of the server-side proxy 103 (i) selects distribution of the response at a given time not via the communication path but via the broadcasting path (ii) adds, to the response from the content server 104, information as to a path via which the response is distributed and time information (a distribution start time and a distribution end time), and (iii) transmits the response to the client-side proxy 102 (SE06). The client-side proxy 102 extracts the time information from the received response and uses a response message to notify the client 101 of a data available time (SE07). The server-side proxy 103 which has distributed data of the first media segment at SE06 transmits, to the content server 104, a request for data of the subsequent media segment (SE08). The content server 104 transmits, in a form of an HTTP response message in the MIME multipart format, a response to the request transmitted at SE08 (SE09). Thereafter, the server-side proxy 103 repeatedly carries out the steps SE08 and SE09 until reception of one (1) piece of content data is finished.

The client 101 which has been notified, at SE07 by use of the response, of the data available time transmits a request again to the client-side proxy 102 after a specified data available time has passed (SE10).

Fig. 14 shows an example in which it is specified that the data available time is a time at which distribution of content data via the broadcasting path is started. That is, after the data available time has passed, the client-side proxy 102 returns a response message to the client 101 while separately receiving, via the broadcasting path, a response message in which fragments of content data is stored, and synthesizing the response message.

After the time at which the distribution is started has passed, the client-side proxy 102 discriminates media segment data which is transmitted via the broadcasting path, and sequentially obtains the media segment data. An IP data cast address (described later) which is added to each IP packet is used for the discrimination. Then, the client-side proxy 102 synthesizes received data into an HTTP response message in the MIME multipart format (SE15).

In this case, the response message to which information and discrimination tag information are added is distributed via broadcasting. The information indicates that verification needs to be carried out in the server-side proxy 103 before use of the response message, and the discrimination tag information is used for the verification. These pieces of information have already been specifically discussed in the description of Fig. 11 and a verification process of the first Embodiment. In accordance with these pieces of information, the client-side proxy 102 transmits, to the server-side proxy 103, a request for verification of whether or not the response synthesized at SE15 is valid (SE16), and the server-side proxy 103 returns, to the client-side proxy 102, a response indicating that the response synthesized at SE15 is valid (SE18). According to this verification process, the server-side proxy 103 can monitor whether or not content data transmitted via the broadcasting path is being used by the client, and a result of the monitoring can be used to, for example, determine whether or not to suspend the distribution. Note, however, that the monitoring does not need to be carried out since the present embodiment specifies a distribution end time in advance.

The client-side proxy 102 uses, as a response to the request transmitted at SE10, an HTTP response message in the MIME multipart format to distribute, to the client 101, data of the first media segment which data has been distributed via the communication path at SE06 (SE11). The client 101 extracts content data (data of a fragment) from the received response which has been distributed at SE11, and starts reproducing content, i.e., a video (SE12). Thereafter, the client 101 distributes, to the content server 104, a request for data of the subsequent media segment (SE13).

The client-side proxy 102 separately obtains media segment data after the time at which the distribution is started has passed. Therefore, the client-side proxy 102 distributes, to the client 101, a response message of media segment data which response message the client-side proxy 102 has already obtained and synthesized before receiving the request from the client 101 (SE19). The client 101 extracts content data (data of a fragment) from the received response message, and reproduces extracted data following the reproduction at SE12 (SE20). Thereafter, the client-side proxy 102 repeatedly carries out the steps SE13 through SE20 until the reproduction of the content, i.e., the video is finished. Note that, as already explained, SE13 and SE19, and SE14 through SE 18 do not synchronize with each other.

Figs. 15 and 16 are views for explaining HTTP messages which are transmitted and received during a process carried out in a case where the data distribution system of Fig. 14 in accordance with the second embodiment of the present invention assumes that a time at which broadcast distribution is started is a data available time (a time at which reproduction of data can be started).

ME01 of (a) of Fig. 15 shows an example of an HTTP request message which is transmitted at each of SE01, SE02, SE03 and SE10 of Fig. 14. ME04 of (b) of Fig. 15 shows an example of an HTTP response message which is in the MIME multipart format and is transmitted at each of SE04 and SE11 of Fig. 14. ME06 of (c) of Fig. 15 shows an example of an HTTP response message which is in the MIME multipart format and is transmitted at SE06 of Fig. 14 and to which path information and time information are added.

As in the case of the first embodiment, the following indicates path information as to the broadcasting path.
X-Alternative-Path: broadcast-ipdatacast
X-Broadcast-Channel: 1
X-Ipdatacast-Address=200.1.1.1
The following indicates a time at which data distribution via the broadcasting path is started.
X-Ipdatacast-Starttime: 03:00:00
The following indicates a time at which the data distribution via the broadcasting path is ended.
X-Ipdatacast-Endtime: 04:00:00

ME07 of (a) of Fig. 16 shows an example of an HTTP response message which notifies, at SE07 of Fig. 14, a data available time. According to the example, the distribution start time of the time information recorded in ME06 of (c) of Fig. 15 has a value of "X-available-time:", and is set to a data available time (a time at which reproduction of data can be started). ME08 of (b) of Fig. 16 shows an example of an HTTP request message which is transmitted at each of SE08 and SE13 of Fig. 14. ME09 of (c) of Fig. 16 shows an example of an HTTP response message which is in the MIME multipart format and is transmitted at each of SE09 and SE19 of Fig. 14. ME14 of (d) of Fig. 16 shows an example of data of an HTTP response message which is in the MIME multipart format and is distributed via broadcasting by IP datacasting at SE14 of Fig. 14. ME14 is herein identical to M910 of Fig. 11. ME16 of (e) of Fig. 16 shows an example of an HTTP request message for verification which is transmitted at SE16 of Fig. 14. ME18 of (f) of Fig. 16 shows an example of an HTTP response message which is returned at SE18 of Fig. 14 in response to the request for verification transmitted at SE16 of Fig. 14.

The following description shows an example in which a data available time is set to not a broadcast distribution start time but a time at which broadcast distribution is ended.

Fig. 17 is a sequence chart showing a process carried out in a case where the data distribution system in accordance with the second embodiment of the present invention assumes that a time at which broadcast distribution is ended is a data available time (a time at which reproduction can be started).

Operation carried out at SH01 through SH06 is identical to the operation which is carried out at SE01 through SE06 and discussed earlier with reference to Fig. 14. Subsequently, the client-side proxy 102 extracts time information from a received response and uses a response message to notify the client 101 of a data available time (SH07). A time to be notified is herein set to a time at which distribution is ended.

The server-side proxy 103 which has distributed data of the first media segment at SH06 transmits, to the content server 104, a request for data of the subsequent media segment (SH08). The content server 104 transmits, in a form of an HTTP response message in the MIME multipart format, a response to the request transmitted at SE08 (SH09). Thereafter, the server-side proxy 103 repeatedly carries out the steps SH08 and SH09 until reception of one (1) piece of content data is finished.

After the distribution start time has passed (not illustrated), the client-side proxy 102 discriminates media segment data which is transmitted via the broadcasting path at SH09 or later steps, and sequentially obtains the media segment data (SH10). An IP data cast address (described earlier) which is added to each IP packet is used for the discrimination. Then, the client-side proxy 102 sequentially synthesizes received data into an HTTP response message in the MIME multipart format (SH11).

In this case, the response message to which information and discrimination tag information (each of which is discussed earlier) are added is distributed via broadcasting. The information indicates that verification needs to be carried out in the server-side proxy 103, and the discrimination tag information is used for the verification. In accordance with these pieces of information, the client-side proxy 102 transmits, to the server-side proxy 103, a request for verification of whether or not the response synthesized at SH11 is valid (SH12), and the server-side proxy 103 returns, to the client-side proxy 102, a response indicating that the response synthesized at SH11 is valid (SH14). According to this verification process, the server-side proxy 103 can monitor whether or not content data transmitted via the broadcasting path is being used by the client, and a result of the monitoring can be used to, for example, determine whether or not to suspend the distribution. Note, however, that the monitoring does not need to be carried out since the present embodiment specifies a distribution end time in advance. Then, the client-side server repeatedly carries out the steps SH10 through SH14 until reception of one (1) piece of content data is finished, and then finishes obtaining all pieces of content data by the time at which the distribution is ended (that is, the time of which the client 101 has been notified and at which data can be used).

The client 101 which has been notified , at SH07 by use of the response, of the data available time distributes a request to the client-side proxy 102 after a specified data available time passes (SH15). The client-side proxy 102 uses, as a response to the request transmitted at SH15, an HTTP response message in the MIME multipart format to distribute, to the client 101, data of the first media segment which data has been distributed via the communication path at SH06 (SH16). The client 101 extracts content data (data of a fragment) from the received response which has been distributed at SH16, and starts reproducing content (SH17). Thereafter, the client 101 requests the content server 104 for data of the subsequent media segment (SH18), receives a response from the client-side proxy 102 (SH19), and extracts content data from the received response and reproduces extracted data following the reproduction at SH 17 (SH20). The client-side proxy 102 has obtained data of these responses before the data available time, i.e., the distribution end time. Thereafter, the client-side proxy 102 repeatedly carries out the steps SH 18 through SH20 until the reproduction of the content is finished.

Fig. 18 shows a message which is used, during operation which is illustrated in the sequence chart of Fig. 17 and carried out by the data distribution system in accordance with the second embodiment of the present invention, to notify the client of the time at which broadcast distribution is ended as the data available time (a time at which reproduction of data can be started).

MH07 of (a) of Fig. 18 shows an example of an HTTP response message which notifies, at SH07 of Fig. 17, a data available time. According to the example, the distribution end time of the time information recorded in ME06 of (c) of Fig. 15 has a value of "X-available-time:", and is set to a data available time (a time at which reproduction of data can be started).

Each of Figs. 14 and 17 shows a case of distributing content data via the broadcasting path as in the case of the first embodiment by further setting a given distribution time. A data available time is returned (SE07 and SH07) in response to the first request from each client 101 (SE01 and SH01). A response in the multipart format which response has been cached by the client-side proxy 102 is returned (SE11, SE19, SH16, and SH 19) in response to the request transmitted again after the data available time has passed (SE10, SE13, SH15, and SH18).

The data available time is exemplified by the following two arrangements shown in Figs. 14 and 17.

Fig. 14 shows the arrangement such that the client 101 is notified of a time at which broadcast distribution is started as a data available time, and the client-side proxy 102 sequentially returns responses to the client 101 while receiving data via broadcasting. The arrangement is suitable for, for example, IP data cast distribution in real-time transmission in which a data distribution time and a data reproduction time synchronize with each other.

Fig. 17 shows the arrangement such that the client 101 is notified of a time at which broadcast distribution is ended as a data available time (that is, by the data available time, the client-side proxy 102 has received and verified all data), and a response in which data having been sequentially received is stored is returned in response to a request from the client 101. The arrangement is suitable for, for example, downloading broadcast distribution which enables reproduction of data after downloading is finished.

The data distribution system in accordance with the second embodiment thus allows distribution of content data in cooperation with the communication path and the broadcasting path.

### [Third Embodiment]

A third embodiment of the present invention discusses an example in which in a system for carrying out a communication between a client and a content server by use of an HTTP protocol, and distributing content data which has been fragmented by use of an HTTP message in the MIME multipart format, image data, which has a large data volume, is distributed via a broadcasting network, and sound data, which has a small data volume, is distributed via a communication network. As in the case of the first embodiment, the following description discusses, with reference to the system configuration diagram of Fig. 1, an overall arrangement of a data distribution system in accordance with the present embodiment, and discusses, with reference to the functional block diagram of Fig. 2, a block configuration of functions carried out in proxies.

Fig. 19 shows a process in accordance with the third embodiment of the present embodiment, the process being carried out in a case where image data is distributed via broadcasting, and sound data is distributed via communication.

From the server-side proxy 103 to the client-side proxy 102, image data of content data is transmitted in common via a broadcasting path, and only sound data of the content data is individually transmitted via communication. Such an arrangement assumes, for example, distribution of multilingual content.

In view of this, a fragment which constitutes a media segment consists of (i) a fragment "fragment1-XXv" in which image data is stored and (ii) a fragment "fragment1-XXa" in which sound data is stored, the image data and the sound data being identical in time (SJ10, SJ23, and the like).

Fig. 19 shows an example illustrating a sequence in a case where (i) identical content has already been requested, (ii) image data which constitutes the identical content has already been distributed via broadcasting, and (iii) the client 101 newly requests content including sound data in Japanese (ja) which sound data has not been requested. It is confirmed at SJ03 that the image data is being distributed via the broadcasting path. Then, it is confirmed at SJ04 whether or not the sound data in Japanese (ja) which sound data has been requested has already been received. Since no sound data has been received, the server-side proxy 103 transmits a request for the sound data to the content server 104 (SJ05). The content server 104 distributes, to the server-side proxy 103, the sound data in a form of an HTTP response message in the MIME multipart format. The server-side proxy 103 extracts the sound data from the response message received from the content server 104, forms an HTTP response message in the MIME multipart format by combining the extracted sound data and cached image data (SJ07), and adds path information to the HTTP response message thus formed (SJ08). The server-side proxy 103 distributes, to the client-side proxy 102, the HTTP response message which is in the MIME multipart format and to which the path information has been added (SJ09).

As in the case of the first embodiment, information as to a broadcasting path via which content data is distributed is added, at SJ08, to a header of the response message from the server-side proxy 103 to the client-side proxy 102. However, according to the present embodiment, information (X-Alternative-Path: broadcast-ipdatacast; video-only) is added to the header, the information being information indicating that only image data is distributed via the broadcasting path.

Image data, which is obtained via the broadcasting path (SJ13) as in the case of the above embodiments, is restored to a message form (SJ14), and is verified (SJ15 and SJ17). For this reason, image data is transmitted in a state in which information for verification (ETag: "abcde", Cache-Control: proxy-revalidate) is added to the image data.

Sound data is individually requested (SJ18), and a response is received (SJ21). Then, the client-side proxy 102 forms a response message which is in the multipart format and is combined with verified image data (SJ22), and transmits the response message to the client 101 (SJ23). The client 101 reproduces the response message (SJ24).

As described earlier, according to the data distribution system in accordance with the present embodiment, only data which needs to be transmitted individually (sound data in the present embodiment) is distributed via communication, and common data (image data in the present embodiment) is simultaneously distributed via broadcasting. This enables optimum content distribution which does not overload a communication band. Note that the present embodiment takes, as an example, a combination of image data and sound data. However, a combination of data which can be distributed in the present form is not limited to this. For example, there may be a case where content data including an image and a sound is distributed as concurrent data via broadcasting, and only subtitle data is distributed via communication.

Figs. 20 through 22 show HTTP messages in accordance with the third embodiment of the present invention, the HTTP messages being distributed during a process which is carried out in a case where image data is distributed via broadcasting and sound data is distributed via communication.

MJ01 of (a) of Fig. 20 shows an example of an HTTP request message at each of SJ01 and SJ02 of Fig. 19. MJ05 of (b) of Fig. 20 shows an example of an HTTP request message at SJ05 of Fig. 19 which requests sound data. MJ06 of (c) of Fig. 20 shows an example of an HTTP response message at SJ06 of Fig. 19 which is in the MIME multipart format.

MJ09 of (a) of Fig.21 shows an example of an HTTP response message which is in the MIME multipart format and to which path information has been added at SJ09 of Fig. 19.

MJ10 of (a) of Fig. 22 shows an example of an HTTP response message at SJ10 of Fig. 19 which is in the MIME multipart format. MJ12 of (b) of Fig. 22 shows an example of an HTTP request message at SJ12 of Fig. 19 which requests a subsequent media segment.

Fig. 23 shows a response which is distributed via the broadcasting path during a process in accordance with the third embodiment of the present invention, the process being carried out in a case where image data is distributed via broadcasting and sound data is distributed via communication.

At SJ13 of Fig. 23, data MJ13 which is obtained by IP-packetizing the HTTP response message in the MIME multipart format is distributed via broadcasting by IP datacasting. Fig. 11 shows a relationship between an HTTP message to be distributed and broadcast distribution data MJ13 obtained by IP-packetizing. An IP packet consists of (i) a header part in which an IP data cast address is stored and (ii) payload data in which a body of data desired to be transferred is stored. In the payload data, each of the following pieces of data (i) through (iii) are stored so as to be divided into one or more IP packets. The pieces of data (i) through (iii) are: (i) request data URI which is a URI specified by an original request message requesting a response message, (ii) data of a header of the HTTP response message to be distributed, and (iii) data of each fragment of a data part of the HTTP response message. The number of pieces of fragment data stored in the payload data is equal to the number of media segments. Further, IP packets which are separately stored in the respective pieces of fragment data bring about an advantage such that, in a case where data is partially lost during broadcasting distribution of the data, content can be reproduced by restoring data other than fragment data corresponding to the lost data.

Moreover, as described earlier, the HTTP response message to be distributed includes (i) information (Cache-Control: proxy-revalidate) indicating that verification needs to be carried out in the server-side proxy 103 before use of the HTTP response message and (ii) discrimination tag information (ETag: "abcde") which is used for the verification (described earlier).

Fig. 24 shows HTTP messages in accordance with the third embodiment of the present invention, the HTTP messages being distributed during a process which is carried out in a case where image data is distributed via broadcasting and sound data is distributed via communication.

MJ15 of (a) of Fig.24 shows an example of an HTTP request message for requesting verification, the HTTP request message being transmitted at SJ15 of Fig. 19. MJ17 of (b) of Fig. 24 shows an example of an HTTP response message indicative of a result of the verification at SJ17 of Fig. 19. MJ18 of (c) of Fig. 24 shows an example of an HTTP request message which requests sound data of a subsequent media segment and is transmitted at each of SJ18 and SJ19 of Fig. 19. MJ20 of (d) of Fig. 24 shows an example of an HTTP response message which is in the MIME multipart format and is transmitted at each of SJ20 and SJ21 of Fig. 19.

Fig. 25 shows an HTTP message in accordance with the third embodiment of the present invention, the HTTP message being distributed after a synthesis process which is carried out in a case where image data is distributed via broadcasting and sound data is distributed via communication.

MJ23 of (a) of Fig. 25 shows an example of an HTTP response message which is in the MIME multipart format and is distributed from the client-side proxy 102 to the client 101 as a response transmitted at SJ23. Data obtained by synthesizing, at SJ22, (i) image data received via the broadcasting path at SJ23 of Fig. 19 and (ii) sound data received via the communication path is described in data of the response.

### [Fourth Embodiment]

A fourth embodiment of the present invention discusses a case where a plurality of clients are connected to a client-side proxy. In a system for carrying out a communication between a client and a content server by use of an HTTP protocol, and distributing content data (a media fragment unit) which has been fragmented by use of an HTTP message in the MIME multipart format, image data, which has a large data volume, is distributed via a broadcasting path, and sound data, which has a small data volume, is distributed via a communication path.

Fig. 26 is a functional block diagram in a case where a plurality of client are connected to a client-side proxy in accordance with the fourth embodiment of the present invention.

In a case where a plurality of clients are connected to a client-side proxy 105, the client-side proxy 105 also includes a monitoring section 2601, so as to carry out cache management. To a request which has already been received, the client-side proxy 105 returning a cached response by proxy without transmitting the request to the content server.

### [Fifth Embodiment]

Each of the above first through fourth embodiments assumes that a client device is a television receiver and that content data is distributed via a communication network and a broadcasting network. Meanwhile, mobile devices such as a mobile phone have recently been provided with television broadcasting receiving functions including one-segment broadcasting. Such mobile devices can also be regarded as client devices to each of which the present invention can be applied as in the case of the application of the present invention to a television receiver (client devices each of which is capable of receiving content data via a communication network and a broadcasting network).

Moreover, concurrent distribution identical to broadcasting can be achieved on a communication network in a mobile environment such as a mobile phone by multicast distribution via a communication network. MBMS (Multimedia Broadcast and Multicast Service) defined in 3GPP (Third Generation Partnership Project) exemplifies the multicast distribution, and carries out, on a radio access communication network, concurrent data distribution which is similar to broadcasting.

MBMS can be said to be highly efficient in carrying out broadcast distribution with respect to many terminals. However, MBMS cannot be said to be necessarily efficient in a case where the number of terminals is small. That is, in a case where the number of mobile phones/mobile devices (clients) which receive data is small, distribution of data to each terminal by unicast distribution allows data distribution to be finished at a higher speed, and the distribution by unicast distribution may be more efficient. However, even in such a case, since a distribution side does not know a connection state, data distribution has been carried out as below. The number of terminals to be connected is estimated in advance, and then the distribution side determines which of the unicast distribution or the MBMS distribution is carried out That is, in a case where the estimation is wrong, inefficient content distribution has been carried out.

In view of this, the present embodiment extends control, which is discussed in each of the above first through fourth embodiments and is control of distribution in which the communication network and the broadcasting network are changed, to control of distribution in which the unicast distribution and the MBMS multicast distribution are changed on the radio access communication network.

Fig. 27 is a system configuration diagram showing an overall arrangement of a data distribution system in accordance with the fifth embodiment of the present invention, the data distribution system using a radio access communication network of a mobile device.

According to the data distribution system, each of a plurality of radio access networks RAN: RAN-1 to RAN-m with respect to a core network is connected to the content server 104 via a proxy 108, and a plurality of client devices (mobile phones, mobile devices) are connected to the respective radio access networks RAN-1 to RAN-m. The content server 104 and the server-side proxy 108 are nodes each constituting the core network. The client devices (mobile phones, mobile devices) include respective clients themselves (which refer to, for example, client applications) 106-1 through 106-n and respective proxy 107-1 through 107-n.

Since a client device is a mobile device, the client device which is used is connected to a RAN, and the client device which is not used is disconnected from the RAN. That is, the number of client devices connected to each of the RANs can vary in accordance with each point of time. Also in a case where a certain RAN to which a corresponding client device is connected has been changed to another RAN, the number of connected client devices varies.

Therefore, it is more efficient to simultaneously distribute content data by the MBMS distribution to a RAN to which a large number of client devices are connected at a certain point of time. Meanwhile, it is more efficient to distribute content data to each of client devices by the unicast distribution to a RAN to which a small number of client devices are connected at the certain point of time.

In view of this, a server-side proxy 108 of the data distribution system in accordance with the present embodiment (i) monitors a connection state of RANs each of which is connected to the server-side proxy 108 (the number of clients each of which is being connected to the server-side proxy 108), (ii) determines in which of a unicast mode by HTTP and a multicast mode by MBMS data is distributed to each of the RANs, and (iii) changes the unicast mode and the multicast mode. That is, according to the present embodiment, since it is considered that requests concentrate in a RAN to which a large number of clients serving as potential destinations to which data is distributed are being connected, data is distributed in the multicast mode to such a RAN. In contrast, since it is considered that not so many requests concentrate in a RAN to which a small number of clients serving as potential destinations to which data is distributed are being connected, data is distributed in the unicast mode to such a RAN. The server-side proxy 108 adaptively changes these modes in accordance with an increase or a decrease in number of clients which are being connected to a RAN. Note that whether or not the number of clients is large or small can be determined in accordance with whether or not the detected number of clients which are being connected to a RAN exceeds a threshold which is set in advance to serve as a criterion. Such a change of distribution mode is carried out as in the case of the change between the communication path and the broadcasting path which change has been discussed in each of the first through fourth embodiments.

That is, in a case where the server-side proxy 108 determines, as a result of monitoring the connection state, that the distribution mode in which distribution is carried out in a certain RAN is changed from the unicast mode to the multicast mode, the server-side proxy 108 (i) transmits, to the client device 106 in the certain RAN via the client-side proxy 107, path information of the MBMS distribution, the path information being added to a header of an HTTP response message, and (ii) starts the MBMS distribution of subsequent content data.

Fig. 28 shows an example of an HTTP message response message which is in the MIME multipart format and is distributed from the server-side proxy 108 to the client-side proxy 107 immediately before the distribution mode is changed to the multicast distribution by MBMS. The HTTP message response message, which corresponds to M906 that is distributed immediately before the distribution mode is changed from the communication network to the broadcasting network in the first embodiment, is provided with a header, X-Alternative-Path: ... (omitted) ... session_name=multicast_content1, indicative of path information of the MBMS multicast distribution instead of path information of the broadcasting path. For the details, see MR01 of (a) of Fig. 28. Subsequent operations are carried out as in the case of those of, for example, the first embodiment that are described earlier.

As described earlier, according to the data communication system which is in accordance with the present embodiment and uses a mobile access communication network, optimum content distribution can be achieved in a case where data distribution modes are appropriately changed between the unicast mode and the multicast mode in accordance with a connection state of client devices which are connected to each RAN. It is herein assumed that s client device is a mobile phone or a mobile device.

Note that according to the above description of the present embodiment, a plurality of RANs are connected to the server-side proxy 108, and the plurality of RANs are RANs which are separate from each other, e.g., RANs which are formed assuming that base stations that are provided at physically different locations are reference points. However, the present embodiment is also applicable by assuming that client devices which are connected to one (1) RAN are grouped into a plurality of groups in accordance with a state of request of each of the client devices and a plurality of RANs are imaginarily formed from each of the plurality of groups.

The description of the embodiments of the present invention assumes that a period of a movie fragment is one second and a period of a media segment is ten seconds. However, a length of the period of the movie fragment is not limited to one second, and a length of the period of the media segment is not limited to ten seconds, either. That is, for example, the period of the movie fragment may have a length of 0.5 second so as to be set to GOP (Group of Picture), which is a unit of coding of MPEG-4. Alternatively, the period of the movie fragment can also be a long period such as two seconds. Further, the content server 104 may be arranged such that the period of the media segment has a length which can be appropriately changed to a length that is set by a user in accordance with a frequency of generation of an HTTP message. That is, in accordance with a purpose and/or a situation, a user can reduce a frequency of generation of a request message and a response message by setting the length of the period of the media segment to, for example, 30 seconds or one minute. Alternatively, in a case where a change occurs frequently, a user can cause a response to occur quickly by setting the length of the period of the media segment to, for example, five seconds. It is also possible to set the movie fragment to be variable and/or to set the media segment to be variable.

In an extreme case, the present invention is also applicable to a data format other than a movie fragment, provided that the data format allows handling of content data by dividing content data into pieces of data having a given length. In other words, a data format which can be handled by the communication system of the present invention is not limited to the movie fragment format. For example, the communication system in accordance with the present invention can be configured by use of a PES (Packetized Elementary Stream) packet of MPEG-2 or a TS (Transport Stream) packet of MPEG-2 TS. That is, according to the communication system in accordance with the present invention, content data is stored in an HTTP message in the MIME multipart format for each piece of unit data (PES packet or TS packet) obtained by dividing the content data into pieces of data having a given length. This allows a proxy server to carry out filtering and handling of stored data by using, for example, header information of the HTTP message without the need of referring to contents of data recorded in each part of a multipart.

It should be noted that the first through fifth embodiments disclosed herein are examples in all aspects and are not restrictive. The scope of the present invention is defined not by the description of the embodiments above but by the claims, and is intended to encompass any alternation within the meaning and scope equivalent to the claims.

### (Summary)

As described earlier, according to conventional simultaneous distribution by streaming, identical messages pass on a communication network. This causes a problem of an increase in traffic on the communication network. Furthermore, there has been no system for (i) using a broadcasting path and a communication path in a shared system to connect data received via different paths, and (ii) causing the data to cooperate and synchronize with each other.

In view of this, according to the above data distribution system, on the assumption that content data is distributed in units of media segments by HTTP in the MIME multipart format, in accordance with, for example, a frequency of generation of an identical request, the server-side proxy adaptively distributes the content data via a broadcasting path and a communication path. According to the data distribution system, the client-side proxy carries out a merge process with respect to information (path discrimination information and synchronization information) as to data which is adaptively distributed via the communication path and the broadcasting path following distribution of a response message via the communication path. Furthermore, in a case where a request for another content is transmitted during broadcasting distribution, only the first data of the another content which data is obtained immediately after a change of content is transmitted at a high speed via communication. This can solve the conventional problems.

### (Preferred Embodiment of Present Invention)

A data distribution system in accordance with the present invention includes: a data distribution device; a distribution-side data relay device; a reception-side data relay device; and a reception terminal device, the data distribution device distributing a plurality of pieces of content data in units of media segments in accordance with a given format, the distribution-side data relay device being connected to each of the data distribution device, a communication network, and a broadcasting network, and distributing, via at least one of the broadcasting network and the communication network, the plurality of pieces of content data which are distributed from the data distribution device, the reception-side data relay device being connected to each of the communication network and the broadcasting network, and distributing, to the reception terminal device, the plurality of pieces of content data which are distributed from the distribution-side data relay device, the reception terminal device being capable of receiving the plurality of pieces of content data which are distributed from the reception-side data relay device, and in response to a data request from the reception terminal device, the distribution-side data relay device adaptively distributing the plurality of pieces of content data via the broadcasting network and the communication network. The data distribution system is preferably arranged such that the given format is HTTP.

A distribution-side data relay device in accordance with the present invention includes: first transmission means for distributing the content via a first distribution path; second transmission means for distributing the content via a second distribution path which is different from the first distribution path; and selection means for selecting the distribution, by either the first transmission means or the second transmission means, the content that is requested by the reception terminal device(s). The distribution-side data relay device is preferably arranged such that: the first distribution path and the second distribution path is communication paths via a broadcasting network and a communication network, respectively; the distribution-side data relay device further includes detection means for detecting a given phenomenon which occurs in a case where traffic on the communication network is heavy; and the selection means selects the distribution of the content by the first transmission means in a case where the detection means detects the occurrence of the given phenomenon.

According to the arrangement, it is possible to transmit content via the broadcasting network when traffic on the communication network is heavy. This makes it possible to reduce an increase in traffic on the communication network.

The distribution-side data relay device is preferably arranged such that: the first distribution path and the second distribution path are communication paths via a broadcasting network and a communication network, respectively; and in a case where the selection means selects the distribution of the content by the first transmission means, the selection means distributes, by the first transmission means, the content to which information is added, the information being information for obtaining the content from the broadcasting network.

According to the arrangement, the content to which information for obtaining the content from the broadcasting network is added is distributed via the broadcasting network. This allows the reception terminal device to obtain the information via the broadcasting network and then obtain the content.

The distribution-side data relay device is preferably arranged such that: in a case where the selection means selects the distribution of the content by the first transmission means, the selection means distributes, by the first transmission means, the content to which information is added, the information indicating that it is necessary to request the distribution-side relay device to verify whether or not the content is valid; and after the start of the distribution by the first transmission means, the selection means suspends the distribution by the first transmission means in accordance with a state in which the distribution-side relay device receives a request for verification.

According to the arrangement, it is possible to verify whether or not content that is distributed by the first transmission means is valid. Furthermore, distribution by the first transmission means is suspended in accordance with a state in which the distribution-side relay device receives a request for verification. Therefore, for example, in a case where no request for the verification has been received for not less than a certain period and it is highly likely that no content has been received via the broadcasting network, it is possible to suspend distribution via the broadcasting network.

In a case where the content is divided into a plurality of segments, the selecting means may select distribution of a part of the plurality of segments by the first transmission means, and select distribution of the other segments of the plurality of segments by the second transmission means.

According to the arrangement, it is possible to distribute one (1) piece of content by utilizing respective characteristics of the first distribution path and the second distribution path. For example, there may be a case where the first distribution path, which has a slow communication speed, is suitable for transmission of a large volume of data, and the second distribution path, which has a high communication speed, is not suitable for transmission of a large volume of data. Also in such a case, of a plurality of segments, the arrangement makes it possible to (i) distribute, via the second transmission means, a segment which is small in data size and/or should be transmitted early, and (ii) transmit, via the first transmission means, a segment which is large in data size.

The first distribution path and the second distribution path may be communication paths via which the content is distributed by multicast and unicast, respectively. In this case, it is preferable that the selecting means preferably select the distribution of the content by the first transmission means in a case where the number of the reception terminal device(s) that serves as a candidate destination to which the content is distributed is more than a given threshold, and the selecting means select the distribution of the content by the second transmission means in a case where the number is not more than the given threshold.

According to the arrangement, in a case where the number of destinations to which content is distributed is not more than a given threshold and a request for distribution is expected to be received with relatively low frequency, the content is distributed by unicast. In a case where the number of destinations to which content is distributed is more than the given threshold and the request for distribution is expected to be received with high frequency, the content is distributed by multicast. This makes it possible to adaptively distribute content via the communication path in accordance with a state.

A reception-side data relay device in accordance with the present invention includes: first reception means for receiving the content which has been distributed via a first distribution path; second reception means for receiving the content which has been distributed via a second distribution path, the second distribution path being different in transmission data format from the first distribution path; and format unification means for transmitting, to the reception terminal device in an identical transmission data format, the content which has been received by either the first reception means or the second reception means. In a case where the content is divided into a plurality of segments, it is preferable that, in a case where the first reception means receives a part of the plurality of segments and the second reception means receives the other segments of the plurality of segments, the format unification means unify transmission data formats of the plurality of segments thus received, and synthesize the plurality of segments into one (1) piece of content, so as to transmit the one (1) piece of content to the reception terminal device.

According to the arrangement, even in a case where a plurality of segments have been received by the first reception means and second reception means, transmission data formats of the received plurality of segments are unified and the plurality of segments are synthesized into one (1) piece of content. According to this, the can use the content as one (1) piece of content without the need of considering that the plurality of segments each consisting the content have been distributed via different paths and in different data formats.

The embodiments and concrete examples discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

Each of a data distribution system and a data distribution method in accordance with the present invention is applicable to a multimedia data distribution technique, and more specifically to efficient multimedia data distribution which is suitable for communication by use of a data transmission protocol and distribution in cooperation with broadcasting.

### Reference Signs List

101-1 to 101-n, 106-1 to 106-n Client (Reception terminal device)
102, 102-1 to 102-n Client-side proxy (Reception-side data relay device)
105, 107-1 to 107-n Client-side proxy (Reception-side data relay device)
103, 108 Server-side proxy (Distribution-side data relay device)
104 Content server (Data distribution device)
201 Reception section
203 Reception section (Second reception means)
204 Reception section (First reception means)
301, 304 Reception section
202, 207 Transmission section
302 Transmission section
307 Transmission section (Second transmission means)
308 Transmission section (First transmission means)
303, 2601 Monitoring section
205 Process section (Format unification means)
305, 2062 Process section (Selection means)
206, 306 Cache section
RAN-1 to RAN-m Radio access network

## Claims

1. A data distribution system comprising:
a data distribution device;
a distribution-side data relay device;
a reception-side data relay device; and
a reception terminal device,
the data distribution device distributing a plurality of pieces of content data in units of media segments in accordance with a given format,
the distribution-side data relay device being connected to each of the data distribution device, a communication network, and a broadcasting network, and distributing, via at least one of the broadcasting network and the communication network, the plurality of pieces of content data which are distributed from the data distribution device,
the reception-side data relay device being connected to each of the communication network and the broadcasting network, and distributing, to the reception terminal device, the plurality of pieces of content data which are distributed from the distribution-side data relay device,
the reception terminal device being capable of receiving the plurality of pieces of content data which are distributed from the reception-side data relay device, and
in response to a data request from the reception terminal device, the distribution-side data relay device adaptively distributing the plurality of pieces of content data via the broadcasting network and the communication network.

2. A data distribution method, comprising the steps of:
(a) distributing a plurality of pieces of content data in units of media segments in accordance with a given format;
(b) distributing, via at least one of a broadcasting network and a communication network, the plurality of pieces of content data which are distributed in the step (a);
(c) distributing the plurality of pieces of content data which are distributed via at least one of the communication network and the broadcasting network in the step (b); and
(d) receiving the plurality of pieces of content data which are distributed in the step (c),
in the step (b), in response to a data request, the plurality of pieces of content data being adaptively distributed via the broadcasting network and the communication network.

3. The data distribution system as set forth in claim 1, wherein the given format is HTTP.

4. A distribution-side data relay device which in a data distribution system for distributing, from a data distribution device to a reception terminal device(s) via a network, content that is requested by the reception terminal device(s), receives the content from the data distribution device and distributes the content to the reception terminal device(s),
said distribution-side data relay device comprising:
first transmission means for distributing the content via a first distribution path;
second transmission means for distributing the content via a second distribution path which is different from the first distribution path; and
selection means for selecting the distribution, by either the first transmission means or the second transmission means, the content that is requested by the reception terminal device(s).

5. The distribution-side data relay device as set forth in claim 4,
the first distribution path and the second distribution path being communication paths via a broadcasting network and a communication network, respectively,
said distribution-side data relay device further comprising detection means for detecting a given phenomenon which occurs in a case where traffic on the communication network is heavy,
the selection means selecting the distribution of the content by the first transmission means in a case where the detection means detects the occurrence of the given phenomenon.

6. The distribution-side data relay device as set forth in claim 4 or 5, wherein:
the first distribution path and the second distribution path are communication paths via a broadcasting network and a communication network, respectively; and
in a case where the selection means selects the distribution of the content by the first transmission means, the selection means distributes, by the first transmission means, the content to which information is added, the information being information for obtaining the content from the broadcasting network.

7. The distribution-side data relay device as set forth in claim 5 or 6, wherein:
in a case where the selection means selects the distribution of the content by the first transmission means, the selection means distributes, by the first transmission means, the content to which information is added, the information indicating that it is necessary to request the distribution-side relay device to verify whether or not the content is valid; and
after the start of the distribution by the first transmission means, the selection means suspends the distribution by the first transmission means in accordance with a state in which the distribution-side relay device receives a request for verification.

8. The distribution-side data relay device as set forth in any one of claims 4 through 7, wherein:
the content is divided into a plurality of segments; and
the selecting means selects distribution of a part of the plurality of segments by the first transmission means, and selects distribution of the other segments of the plurality of segments by the second transmission means.

9. The distribution-side data relay device as set forth in claim 4, wherein:
the first distribution path and the second distribution path are communication paths via which the content is distributed by multicast and unicast, respectively; and
the selecting means selects the distribution of the content by the first transmission means in a case where the number of the reception terminal device(s) that serves as a candidate destination to which the content is distributed is more than a given threshold, and the selecting means selects the distribution of the content by the second transmission means in a case where the number is not more than the given threshold.

10. A reception-side data relay device which in a data distribution system for distributing content from a data distribution device to a reception terminal device via a network, receives the content thus distributed and distributes the content to the reception terminal device,
said reception-side data relay device comprising:
first reception means for receiving the content which has been distributed via a first distribution path;
second reception means for receiving the content which has been distributed via a second distribution path, the second distribution path being different in transmission data format from the first distribution path; and
format unification means for transmitting, to the reception terminal device in an identical transmission data format, the content which has been received by either the first reception means or the second reception means.

11. The reception-side data relay device as set forth in claim 10, wherein:
the content is divided into a plurality of segments; and
in a case where the first reception means receives a part of the plurality of segments and the second reception means receives the other segments of the plurality of segments, the format unification means unifies transmission data formats of the plurality of segments thus received, and synthesizes the plurality of segments into one (1) piece of content, so as to transmit the one (1) piece of content to the reception terminal device.
